# EUROPÄISCHE PATENTSCHRIFT

(11) **EP 3 378 838 B1**
(45) Veröffentlichungstag und Bekanntmachung des Hinweises auf die Patenterteilung: **04.12.2019**
(21) Anmeldenummer: 18163129.2
(22) Anmeldetag: 21.03.2018
(51) Int. Cl.: C02F 1/66, C02F 1/68, C02F 1/28, C02F 1/40

(54) **NEUTRALISATIONSVORRICHTUNG**
NEUTRALISATION DEVICE
DISPOSITIF DE NEUTRALISATION

(30) Priorität: 21.03.2017 DE 102017105998
(43) Veröffentlichungstag der Anmeldung: 26.09.2018
(73) Patentinhaber: Bomat Heiztechnik GmbH, 88662 Überlingen (DE)
(72) Erfinder: BOMMER, Rolf, 88662 Überlingen (DE)
(74) Vertreter: Daub, Thomas

(56) Entgegenhaltungen:
- DE-C- 681 682
- DE-U1- 20 005 409
- US-A1- 2016 272 517

## Beschreibung

### Stand der Technik

Die Erfindung betrifft eine Neutralisationsvorrichtung und ein Neutralisationsverfahren.

Aus der EP 1 886 975 A1 ist bereits ein Neutralisator bekannt, bei welchem durch Schütteln, Rühren oder Einbringen von Luft versucht wird, Neutralisationssalze aus einer Schicht eines zur Neutralisation verwendeten Neutralisationsmaterials zu lösen und auszuschwemmen. Dies ist nur zu einem geringen Anteil möglich, da durch chemische Reaktionen während einer Neutralisation die Neutralisationssalze sich an einer Oberfläche des Neutralisationsmaterials anheften. Hierdurch wird das Neutralisationsmaterial verschlammt und dessen Neutralisationswirkung wird vermindert. Bei einer Instandhaltung fallen dabei insbesondere hohe Aufbereitungs- und Entsorgungskosten an.

Aus der DE 200 05 409 U1 ist bereits ein Reaktionssystem bekannt, welches ein äußeres Mantelgefäß aufweist, in welchem eine innere Reaktionstrommel drehbar gelagert ist.

Durch die Rotation der Reaktionstrommel wird ein Umschichten des Neutralisationsmittels, eine Ausschwemmung sedimentierter Anteile, ein Aufrauen der Oberfläche des Neutralisationsmaterials durch Granulat, sowie eine optimierte Aufnahme gasförmiger Medien bewirkt.

In der US 2016/0272517 A1 wird ebenfalls eine aus einem Mantelgefäß bestehende Vorrichtung beschrieben, worin eine rotierende Reaktionskammer drehbar gelagert ist. Die Reaktionskammer enthält eine Quelle für Hydroxidionen, beispielsweise Calciumcarbonat, welche als Neutralisationsmaterial dient.

Die Aufgabe der Erfindung besteht insbesondere darin, eine gattungsgemäße Vorrichtung und/oder ein gattungsgemäßes Verfahren mit verbesserten Eigenschaften hinsichtlich einer Effizienz, insbesondere im Hinblick auf eine Effizienz einer Neutralisation und/oder einer Materialeffizienz des Neutralisationsmaterials, bereitzustellen. Die Aufgabe wird erfindungsgemäß durch die Merkmale der Patentansprüche 1 und 15 gelöst, während vorteilhafte Ausgestaltungen und Weiterbildungen der Erfindung den Unteransprüchen entnommen werden können.

### Vorteile der Erfindung

Die Erfindung geht aus von einer Neutralisationsvorrichtung, welche zur Neutralisation zumindest eines Fluids, insbesondere eines Kondensats aus einer Verbrennung von Brennstoff, vorgesehen ist, mit zumindest einem ersten Behälter, welcher zur Aufnahme des Fluids vorgesehen ist, und mit zumindest einem zweiten Behälter, welcher zumindest zur Aufnahme von Neutralisationsmaterial vorgesehen ist, wobei die Behälter zumindest teilweise, vorzugsweise zumindest zu einem Großteil und besonders bevorzugt vollständig, ineinander angeordnet sind, und mit einer Lagereinheit, die dazu vorgesehen ist, den zweiten Behälter relativ zum ersten Behälter beweglich zu lagern,

Die Lagereinheit ist dazu vorgesehen, den zweiten Behälter relativ zum ersten Behälter um zumindest eine Schwenkachse zumindest teilweise schwenkbar zu lagern. Hierdurch kann eine Effizienz der Neutralisationsvorrichtung verbessert werden. Vorteilhaft kann eine Oberfläche des Neutralisationsmaterials, insbesondere durch gegenseitiges Aneinanderreiben, mechanisch gereinigt werden. Dadurch kann ein Verbrauch von Neutralisationsmaterial verringert werden. Ferner kann eine wartungsfreie Standzeit verlängert werden, insbesondere ohne dass Neutralisationsmaterial ausgetauscht werden muss. Es kann insbesondere ein Wirkungsgrad der Neutralisation verbessert werden. Besonders vorteilhaft können laufende Kosten, wie beispielsweise der Erwerb und Austausch des Neutralisationsmaterials, sowie die Wartung reduziert werden. Weiter vorteilhaft kann eine Homogenität einer Abnutzung und insbesondere einer Neutralisation durch das Neutralisationsmaterial verbessert werden. Weiter vorteilhaft kann eine Neutralisationswirkung verbessert werden, da bei einer Neutralisation entstehende Neutralisationsreste, wie beispielsweise Neutralisationssalze, aus dem zweiten Behälter ausgeschwemmt werden können.

Unter einer "Neutralisationsvorrichtung" soll insbesondere eine Vorrichtung verstanden werden, welche zumindest zu einer Neutralisation zumindest eines Fluids und insbesondere zusätzlich zu einer Reinigung und/oder Wiederaufbereitung des Fluids vorgesehen ist. Insbesondere ist die Neutralisationsvorrichtung zu einer Reinigung und/oder Wiederaufbereitung eines Verbrennungskondensats und/oder von Brauchwasser vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Neutralisationsvorrichtung ist insbesondere zumindest Teil eines Neutralisators oder kann den Neutralisator vollständig ausbilden. Unter einer "Neutralisation" soll dabei insbesondere eine pH-Wert-Verschiebung eines Fluids in Richtung neutral, insbesondere in Richtung eines pH-Werts von 7, verstanden werden. Unter einem "Fluid" soll insbesondere ein Gas, eine Flüssigkeit und/oder ein Gas-Flüssigkeitsgemisch verstanden werden. Das Fluid kann als Gas insbesondere ein Abgas umfassen. Vorzugsweise umfasst das Fluid als eine Flüssigkeit ein Kondensat. Bei dem Fluid handelt es sich insbesondere um ein Fluid aus einer Verbrennung von Brennstoff, insbesondere Festbrennstoff, insbesondere Kohle, Torf, Holz, Pellets und/oder Biomasse, Flüssigkeitsbrennstoff, insbesondere Öl, Heizöl, Biobutanol, Biodiesel, Bioethanol, Bioheizöl, und/oder Gasbrennstoff, wie beispielsweise Erdgas, Klärgas, Deponiegas, Biogas oder dergleichen. Die Neutralisationsvorrichtung weist insbesondere das Neutralisationsmaterial auf. Unter einem "Neutralisationsmaterial" soll insbesondere ein Material verstanden werden, welches dazu vorgesehen ist, ein Fluid bei einem Durchfluss des Fluids durch das Neutralisationsmaterial und/oder bei einer Mischung mit dem Neutralisationsmaterial zu neutralisieren. Bevorzugt ist das Neutralisationsmaterial zumindest teilweise, vorzugsweise zumindest zu einem Großteil und besonders bevorzugt vollständig als Granulat ausgebildet. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % verstanden werden. Vorzugsweise besteht das Neutralisationsmaterial zumindest teilweise, vorzugsweise zumindest zu einem Großteil und besonders bevorzugt vollständig aus Kalkstein. Denkbar ist, dass der zweite Behälter zusätzlich zur Aufnahme des Neutralisationsmaterials zu einer Aufnahme eines Schmirgelmaterials vorgesehen ist, welches insbesondere vermischt mit dem Neutralisationsmaterial in dem zweiten Behälter angeordnet ist. Insbesondere weist die Neutralisationsvorrichtung das Schmirgelmaterial auf. Unter einem "Schmirgelmaterial" soll insbesondere ein Material verstanden werden, welches zu einer mechanischen Bearbeitung des Neutralisationsmaterials insbesondere durch Reibung vorgesehen ist und welches insbesondere einen größeren Härtegrad aufweist als das Neutralisationsmaterial. Das Schmirgelmaterial ist insbesondere zumindest teilweise, vorzugsweise zumindest zu einem Großteil und besonders bevorzugt vollständig als Granulat ausgebildet. Vorzugsweise kann das Schmirgelmaterial zumindest teilweise, vorzugsweise zumindest zu einem Großteil und besonders bevorzugt vollständig aus Sand, Korund, Magnetit, Hämatit, Quarz, einem Gemisch dieser oder dergleichen bestehen. Vorzugsweise ist der zweite Behälter höchstens zu 90 %, vorzugsweise höchstens zu 75 % und besonders bevorzugt höchstens zu 50 % eines Volumens des zweiten Behälters mit dem Neutralisationsmaterial und/oder dem Schmirgelmaterial befüllt, so dass insbesondere in zumindest einem Betriebszustand bei einer Schwenkbewegung des zweiten Behälters relativ zum ersten Behälter das Neutralisationsmaterial und/oder das Schmirgelmaterial innerhalb des zweiten Behälters in Bewegung versetzt werden kann. Ferner ist denkbar, dass der zweite Behälter zusätzlich zur Aufnahme des Neutralisationsmaterials und/oder des Schmirgelmaterials zu einer Aufnahme eines Filtermaterials vorgesehen ist, welches insbesondere vermischt mit dem Neutralisationsmaterial und/oder dem Schmirgelmaterial in dem zweiten Behälter angeordnet ist. Insbesondere weist die Neutralisationsvorrichtung das Filtermaterial auf. Unter einem "Filtermaterial" soll insbesondere ein Material verstanden werden, welches zumindest zu einer Filtrierung des Fluids, insbesondere zum Zurückhalten von Verunreinigungen des Fluids, wie beispielsweise Schwebstoffen, Schwermetallen oder dergleichen, vorgesehen ist. Besonders bevorzugt kann das Filtermaterial als Reduktionsmittel vorgesehen sein, welches Oxidationsmittel, wie beispielsweise Ozon oder Chlor, aus dem Fluid entfernt. Alternativ oder zusätzlich kann das Filtermaterial zu einer Absorption und/oder Adsorption von Verunreinigungen des Fluids vorgesehen sein. Das Filtermaterial ist insbesondere zumindest teilweise, vorzugsweise zumindest zu einem Großteil und besonders bevorzugt vollständig als Granulat ausgebildet. Vorzugsweise kann das Filtermaterial zumindest teilweise, vorzugsweise zumindest zu einem Großteil und besonders bevorzugt vollständig aus Aktivkohle, Bentonit, einem Gemisch dieser oder dergleichen bestehen. Ferner ist denkbar, dass das Filtermaterial auch durch das Neutralisationsmaterial und/oder das Schmirgelmaterial ausgebildet sein kann oder umgekehrt. Vorzugsweise ist der zweite Behälter höchstens zu 90 %, vorzugsweise höchstens zu 75 % und besonders bevorzugt höchstens zu 50 % eines Volumens des zweiten Behälters mit dem Neutralisationsmaterial, dem Schmirgelmaterial und/oder dem Filtermaterial befüllt, so dass insbesondere in zumindest einem Betriebszustand bei einer Schwenkbewegung des zweiten Behälters relativ zum ersten Behälter das Neutralisationsmaterial und/oder das Schmirgelmaterial innerhalb des zweiten Behälters in Bewegung versetzt werden kann. Ferner ist der zweite Behälter insbesondere zu einer Aufnahme des Fluids vorgesehen. Vorzugsweise ist der zweite Behälter innerhalb des ersten Behälters angeordnet, so dass insbesondere der zweite Behälter als ein Innenbehälter und/oder der erste Behälter als ein Außenbehälter ausgebildet ist. Der erste Behälter weist insbesondere einen Innenraum auf, in welchem der zweite Behälter angeordnet ist. Vorzugsweise weist der erste Behälter einen vorzugsweise schwenkbaren Deckel auf, welcher insbesondere Zugang zum Innenraum gewährt. Unter einer "Lagereinheit" soll insbesondere eine Einheit verstanden werden, welche dazu vorgesehen ist, eine Bewegung des zweiten Behälters relativ zum ersten Behälter in zumindest einem Freiheitsgrad zu ermöglichen und gleichzeitig insbesondere eine Bewegung des zweiten Behälters relativ zum ersten Behälter in zumindest einem weiteren Freiheitsgrad zumindest einzuschränken. Vorzugsweise schränkt die Lagereinheit translatorische Freiheitsgrade des zweiten Behälters relativ zum ersten Behälter ein und/oder blockiert diese. Insbesondere umfasst die Lagereinheit zumindest eine Lagerachse, welche zur Lagerung des zweiten Behälters vorgesehen ist, sowie insbesondere zumindest ein, vorzugsweise zwei, bevorzugt genau zwei Lager, insbesondere Gleitlager und/oder Wälzlager, in welchem/welchen die Lagerachse geführt ist. Denkbar ist, dass die Lagereinheit zusätzlich zu einer Lagerung des zweiten Behälters zumindest eine translatorischen Bewegung des zweiten Behälters ermöglicht. Insbesondere dazu kann die Lagereinheit zumindest eine Führung aufweisen, welche den zweiten Behälter bei einer Bewegung auf einer definierten Bahn führt. Unter einer "Schwenkachse" soll insbesondere eine Achse verstanden werden, welche in zumindest einem Betriebszustand bei einer Schwenkbewegung des zweiten Behälters zumindest im Wesentlichen senkrecht zu einer von dem zweiten Behälter abhängigen und insbesondere aus dessen Trägheit resultierenden Zentripetalkraft orientiert ist. Vorzugsweise ist die Schwenkachse zumindest im Wesentlichen parallel zu einer Haupterstreckung des zweiten Behälters orientiert. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel insbesondere eine maximale Abweichung von insbesondere kleiner als 8°, vorteilhaft kleiner als 5° und besonders vorteilhaft kleiner als 2° aufweist. Der Ausdruck "zumindest im Wesentlichen parallel" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 0° einschließen und der Winkel insbesondere eine maximale Abweichung von insbesondere kleiner als 8°, vorteilhaft kleiner als 5° und besonders vorteilhaft kleiner als 2°. Unter einer "Haupterstreckungsrichtung" eines Objekts soll insbesondere eine Richtung verstanden werden, welche parallel zu einer längsten Kante eines kleinsten gedachten geometrischen Quaders verläuft, welcher das Objekt gerade noch vollständig umschließt. Unter "zumindest teilweise schwenkbar" soll insbesondere zumindest um zumindest einen Winkel, insbesondere einen Winkel von weniger als 360°, bewegbar verstanden werden. Ferner soll unter "schwenkbar" auch drehbar oder rotierbar verstanden werden, und zwar insbesondere um einen Winkel von zumindest 360°. Insbesondere kann die Neutralisationsvorrichtung zumindest eine Filterkartusche aufweisen. Die Filterkartusche umfasst insbesondere zumindest ein Filter-, Absorptions- und/oder Adsorptionselement, welches zu einer Aufnahme von Neutralisationssalzen vorgesehen ist. Die Filterkartusche ist vorzugsweise in einem Nahbereich des zweiten Behälters, insbesondere innerhalb des ersten Behälters, angeordnet. Vorzugsweise ist eine Haupterstreckungsrichtung der Filterkartusche zumindest im Wesentlichen parallel zur Haupterstreckungsrichtung des zweiten Behälters, des ersten Behälters und/oder zur Schwenkachse. Bevorzugt ist eine Haupterstreckungsfläche der Filterkartusche zumindest im Wesentlichen parallel zu einer Seitenwand des ersten Behälters. Die Filterkartusche ist insbesondere austauschbar ausgebildet. Vorzugsweise weist die Filterkartusche zumindest einen Handgriff auf, welcher zu einem Austausch der Filterkartusche vorgesehen ist. Insbesondere ist der Handgriff derart angeordnet, dass in zumindest einem Betriebszustand der Handgriff der Filterkartusche über einem Fluidspiegel liegt.

In einer Ausgestaltung der Erfindung wird vorgeschlagen, dass die Schwenkachse zumindest durch den zweiten Behälter verläuft. Vorzugsweise verläuft die Schwenkachse durch den geometrischen Mittelpunkt des zweiten Behälters und bildet besonders bevorzugt eine Rotationsachse des Behälters aus. Es kann vorteilhaft eine Verteilung des Neutralisationsmaterials und insbesondere eine in einem Betriebszustand durch Bewegung des zweiten Behälters erzeugte Reibung des Neutralisationsmaterials verbessert werden. Insbesondere kann Bauraum eingespart werden. Ferner kann eine Stabilität der Neutralisationsvorrichtung verbessert werden.

Es wird weiter vorgeschlagen, dass der zweite Behälter zumindest einen Fluideintritt und zumindest einen Fluiddurchlass aufweist, wobei dem Fluideintritt zumindest eine Fluideintrittsrichtung und dem Fluiddurchlass zumindest eine Fluiddurchlassrichtung zugeordnet sind, welche zueinander winklig orientiert sind. Unter einem "Fluideintritt" soll insbesondere ein Eintritt für ein Fluid verstanden werden, welcher vorzugsweise zumindest teilweise, insbesondere zumindest zu einem Großteil und besonders bevorzugt vollständig von zumindest einer Fluideintrittsöffnung ausgebildet ist. Ferner kann der Fluideintritt einen Fluideintrittskanal aufweisen, welcher insbesondere die Fluideintrittsöffnung umfasst. Alternativ oder zusätzlich kann der Fluideintritt zumindest ein Fluidleit- und/oder ein Fluidablenkelement aufweisen, wie beispielsweise eine Schaufel. Besonders bevorzugt ist der Fluideintritt als eine Bohrung ausgebildet. Der Fluideintritt ist insbesondere an einer Stirn des zweiten Behälters angeordnet. Der Fluideintritt ist insbesondere in einem Nahbereich des zumindest einen Lagers der Lagereinheit angeordnet. Unter einem "Nahbereich" soll insbesondere ein räumlicher Bereich verstanden werden, welcher aus Punkten gebildet ist, die jeweils einen minimalen Abstand von höchstens 20 cm, vorteilhaft von höchstens 15 cm, vorzugsweise von höchstens 10 cm und besonders bevorzugt von höchstens 5 cm von einem Referenzpunkt und/oder einem Referenzbauteil, insbesondere des Lagers, aufweisen. Unter einem "Fluiddurchlass" soll insbesondere ein Durchlass für ein Fluid verstanden werden, welcher vorzugsweise zumindest teilweise, insbesondere zumindest zu einem Großteil und besonders bevorzugt vollständig von zumindest einer Fluiddurchlassöffnung ausgebildet ist. Ferner kann der Fluiddurchlass einen Fluiddurchlasskanal aufweisen, welcher insbesondere die Fluiddurchlassöffnung umfasst. Alternativ oder zusätzlich kann der Fluiddurchlass zumindest ein Fluidleit-, ein Fluidförder- und/oder ein Fluidablenkelement aufweisen, wie beispielsweise eine Schaufel. Insbesondere sind Fluideintritt und Fluiddurchlass voneinander verschieden ausgebildet. Besonders bevorzugt ist der Fluiddurchlass als eine Bohrung ausgebildet. Ganz besonders bevorzugt weist der Fluiddurchlass eine konische Form auf, wodurch insbesondere ein Verstopfen des Fluiddurchlasses, insbesondere durch in dem zweiten Behälter angeordnetes Material und/oder Verunreinigungen des Fluids, vermieden werden kann. Dabei erweitert sich eine Öffnung des Fluiddurchlasses durch eine Behälterwand nach außen vorzugsweise konisch. Ferner sind verschiedene weitere Formen des Fluiddurchlasses denkbar, wie beispielsweise eine Rundform, eine Ovalform und/oder eine eckige Form. Insbesondere entlang einer Haupterstreckungsrichtung und/oder einer axialen Richtung des zweiten Behälters können Fluiddurchlässe verschiedene Formen und/oder Größen aufweisen. Besonders bevorzugt weisen die Fluiddurchlässe entlang der Haupterstreckungsrichtung einen Formgradienten und/oder einen Gradienten der Öffnung auf. Somit ist denkbar, dass entlang der Haupterstreckungsrichtung und/oder der Axialrichtung eine Öffnung der Fluiddurchlässe zunimmt, so dass insbesondere eine Fluidförderung entlang dieser Richtung zunimmt. Unter "winklig" soll insbesondere eine Orientierung verstanden werden, welche von einer zumindest im Wesentlichen parallelen Orientierung abweicht. Vorzugsweise ist die Fluideintrittsrichtung zumindest im Wesentlichen senkrecht zur Fluiddurchlassrichtung. Unter einer "Fluideintrittsrichtung" soll insbesondere eine Richtung verstanden werden, in welcher das Fluid in zumindest einem Betriebszustand in den zweiten Behälter eintritt. Vorzugsweise ist die Fluideintrittsrichtung zumindest im Wesentlichen senkrecht zur Fluideintrittsöffnung. Der Fluiddurchlass ist insbesondere an einem Mantel des zweiten Behälters angeordnet. Unter einer "Fluiddurchlassrichtung" soll insbesondere eine Richtung verstanden werden in welcher das Fluid in zumindest einem Betriebszustand aus dem zweiten Behälter austritt. Vorzugsweise ist die Fluiddurchlassrichtung zumindest im Wesentlichen senkrecht zur Fluiddurchlassöffnung. Es kann vorteilhaft eine Effizienz einer Neutralisation weiter verbessert werden, da insbesondere eine Homogenität eines Anströmens des Neutralisationsmaterials verbessert werden kann.

Es wird zudem vorgeschlagen, dass der zweite Behälter zumindest einen Fluideintritt, insbesondere den zuvor genannten Fluideintritt, aufweist, welchem zumindest eine Fluideintrittsrichtung, insbesondere die zuvor genannte Fluideintrittsrichtung, zugeordnet ist, welche zumindest im Wesentlichen parallel zur Schwenkachse orientiert ist. Insbesondere ist die Fluiddurchlassrichtung zumindest im Wesentlichen senkrecht zur Schwenkachse orientiert. Besonders bevorzugt ist der Fluideintritt innerhalb des Lagers der Lagereinheit angeordnet. Es können vorteilhaft ein Fluidfluss sowie ein Anströmverhalten des Fluids an das Neutralisationsmaterial weiter verbessert werden.

Es wird ferner vorgeschlagen, dass der zweite Behälter zumindest einen weiteren Fluiddurchlass und vorzugsweise mehrere weitere Fluiddurchlässe aufweist, welcher/welche entlang der Schwenkachse und/oder entlang einer Umfangsrichtung des zweiten Behälters versetzt zum Fluiddurchlass angeordnet ist/sind. Die Umfangsrichtung ist insbesondere zumindest im Wesentlichen senkrecht zur Schwenkachse und/oder zu einer von der Schwenkachse ausgehenden Radialrichtung. Vorzugsweise ist die Umfangsrichtung in zumindest einem Betriebszustand zumindest im Wesentlichen parallel zu einer Schwenkrichtung des zweiten Behälters bei einer Schwenkbewegung des zweiten Behälters relativ zum ersten Behälter. Der weitere Fluiddurchlass ist insbesondere in Umfangsrichtung um zumindest 10°, vorzugsweise um zumindest 25 und besonders bevorzugt um zumindest 45° und/oder insbesondere um höchstens 180°, vorzugsweise um höchstens 90° und besonders bevorzugt um höchstens 45° zum Fluiddurchlass versetzt angeordnet. Vorzugsweise ist der weitere Fluiddurchlass äquivalent zum Fluiddurchlass ausgebildet. Besonders bevorzugt ist der Fluiddurchlass in zumindest einem Betriebszustand zu einer Förderung des Fluids in den zweiten Behälter hinein vorgesehen, um das Neutralisationsmaterial zu spülen, und der weitere Fluiddurchlass ist in zumindest einem Betriebszustand zu einer zeitlich zu der Förderung des Fluids in den zweiten Behälter hinein versetzten Förderung des Fluids zusammen mit zumindest einem bei einer Neutralisation entstehenden Neutralisationssalz aus dem zweiten Behälter heraus vorgesehen. Besonders bevorzugt ist ein durch eine Bewegung des zweiten Behälters relativ zum ersten Behälter erzeugter Durchfluss des Fluids durch den zweiten Behälter insbesondere drehzahlabhängig zumindest gleich und vorzugsweise größer als ein Gesamtdurchfluss durch die Neutralisationsvorrichtung. Insbesondere kann ein gleiches Fluidvolumen, welches die Neutralisationsvorrichtung durchfließt, währenddessen mehrmals abgeschöpft und einer Neutralisierung durch das Neutralisationsmaterial unterzogen werden. Unter "zeitlich versetzt" soll insbesondere zeitlich aufeinander folgend verstanden werden, wobei darunter insbesondere ein zeitlicher Versatz vorzugsweise bei einer vorgegebenen Schwenkgeschwindigkeit von zumindest 0,1 s, vorzugsweise von zumindest 0,3 s, bevorzugt von zumindest 0,6 s und besonders bevorzugt von zumindest 1,2 s verstanden werden soll. Vorzugsweise entspricht eine Schwenkgeschwindigkeit des zweiten Behälters relativ zum ersten Behälter einer Drehzahl von höchstens 100 U/min, vorzugsweise von höchstens 50 U/min, bevorzugt von höchstens 20 U/min und besonders bevorzugt von höchstens 10 U/min. Es kann vorteilhaft eine Effizienz des Neutralisationsmaterials verbessert werden, da bei der Neutralisation entstehende Neutralisationssalze auf einfache Art und Weise ausgespült werden können.

Vorzugsweise ist die Neutralisationsvorrichtung frei von einer Pumpe, welche dazu vorgesehen wäre, das Fluid durch die Neutralisationsvorrichtung zu fördern.

Es wird vorgeschlagen, dass der zweite Behälter zumindest eine Fluiddurchlassgruppe aufweist, welche mehrere Fluiddurchlässe umfasst. Die mehreren Fluiddurchlässe sind zueinander entlang der Schwenkachse und/oder entlang einer Umfangsrichtung des zweiten Behälters versetzt angeordnet. Die Fluiddurchlassgruppe ist insbesondere an einem Mantel des zweiten Behälters angeordnet. Die Fluiddurchlassgruppe bildet insbesondere eine Perforation des zweiten Behälters aus. Vorzugsweise sind die Fluiddurchlässe der Fluiddurchlassgruppe in Form einer Matrix, insbesondere in Zeilen und Spalten, zueinander angeordnet. Alternativ kann die Fluiddurchlassgruppe eine andere Form einer Anordnung der mehreren Fluiddurchlässe aufweisen, wie beispielsweise in einem Viereck, Rechteck, Hexagon, Polygon, Kreis oder dergleichen. Vorzugsweise weist der zweite Behälter zumindest eine weitere Fluiddurchlassgruppe und vorzugsweise mehrere weitere Fluiddurchlassgruppen auf, welche insbesondere mehrere weitere Fluiddurchlässe aufweist/aufweisen und welche entlang der Schwenkachse und/oder entlang einer Umfangsrichtung des zweiten Behälters versetzt zur Fluiddurchlassgruppe angeordnet ist/sind. Die weitere Fluiddurchlassgruppe ist insbesondere in Umfangsrichtung um zumindest 10°, vorzugsweise um zumindest 25 und besonders bevorzugt um zumindest 45° und/oder insbesondere um höchstens 180°, vorzugsweise um höchstens 90° und besonders bevorzugt um höchstens 45° zur Fluiddurchlassgruppe versetzt angeordnet. Es kann ein Ausspülen von Neutralisationssalzen weiter verbessert werden.

Erfindungsgemäß weist der erste Behälter zumindest eine erste Fluidkammer und zumindest eine zweite Fluidkammer auf, welche der zweite Behälter fluidtechnisch miteinander verbindet. Insbesondere verbindet der Fluideintritt den zweiten Behälter mit der ersten Fluidkammer und/oder die Fluiddurchlässe verbinden den zweiten Behälter mit der zweiten Fluidkammer. Vorzugsweise ist die Filterkartusche in der zweiten Fluidkammer angeordnet. Ferner kann insbesondere der erste Behälter zumindest eine dritte Fluidkammer aufweisen. Insbesondere sind die erste Fluidkammer, die zweite Fluidkammer und die dritte Fluidkammer fluidtechnisch hintereinander in besagter Reihenfolge angeordnet. Es kann vorteilhaft ein Fluidfluss durch den zweiten Behälter verbessert werden. Insbesondere kann ein noch zu neutralisierendes und/oder zu reinigendes Fluid in der ersten Fluidkammer zumindest teilweise von einem zumindest teilweise neutralisierten und/oder gereinigten Fluid in der zweiten Fluidkammer getrennt werden.

Insbesondere um eine Homogenität eines Abriebs des Neutralisationsmaterials weiter zu verbessern, wird vorgeschlagen, dass der zweite Behälter eine Form eines rotationssymmetrischen Körpers aufweist, wie insbesondere eine Form eines Polyeders, einer quadratischen Säule, eines Würfels, eines Zylinders, insbesondere eines Polygonzylinders, oder einer Pyramide. Besonders bevorzugt weist der Behälter eine Form eines Rotationskörpers auf, wie insbesondere eines Kegels, eines Kegelstumpfes, eines Rotationsparaboloids, eines Rotationshyperboloids, eines Rotationsellipsoids, einer Kugel oder eines Kreiszylinders.

Es wird vorgeschlagen, dass die Neutralisationsvorrichtung zumindest einen Fluidfilter umfasst, welcher fluidtechnisch vor zumindest einem Fluiddurchlass des zweiten Behälters angeordnet ist. Vorzugsweise ist der Fluidfilter in einem Nahbereich des Fluideintritts angeordnet. Besonders bevorzugt ist der Fluidfilter innerhalb des Fluideintritts, insbesondere mittelbar und besonders bevorzugt unmittelbar hinter dem Fluideintritt, angeordnet. Es kann ein Wartungsintervall verlängert werden, da der Fluidfilter vorteilhaft durch Verbrennung entstandene und sich im Fluid absetzende Schwebstoffe aus dem Fluid herausfiltert und so vermieden werden kann, dass diese das Neutralisationsmaterial verunreinigen und/oder den Fluiddurchlass blockieren.

Um einen Abrieb des Neutralisationsmaterials weiter zu verbessern, wird vorgeschlagen, dass die Neutralisationsvorrichtung zumindest ein Rührelement umfasst, welches innerhalb des zweiten Behälters angeordnet ist und welches in zumindest einem Betriebszustand dazu vorgesehen ist, bei zumindest einer Schwenkbewegung des zweiten Behälters relativ zum ersten Behälter das Neutralisationsmaterial und/oder das Fluid zu rühren. Das Rührelement ist vorzugsweise an einem Mantel des zweiten Behälters angeordnet und/oder drehfest mit dem zweiten Behälter verbunden. Besonders bevorzugt ist das Rührelement einstückig mit dem zweiten Behälter verbunden. Das Rührelement kann die Form einer Schaufel, eines Hügels, eines Zahns und/oder einer Lamelle aufweisen.

Alternativ oder zusätzlich kann die Neutralisationsvorrichtung zumindest ein Förderelement aufweisen, welches innerhalb des zweiten Behälters angeordnet ist und welches in zumindest einem Betriebszustand dazu vorgesehen ist, das Neutralisationsmaterial, das Filtermaterial und/oder das Schmirgelmaterial entlang dem zweiten Behälter zu fördern. Das Förderelement kann insbesondere einstückig mit dem Rührelement ausgebildet sein. Das Förderelement ist vorzugsweise an einem Mantel des zweiten Behälters angeordnet und/oder drehfest mit dem zweiten Behälter verbunden. Besonders bevorzugt ist das Förderelement einstückig mit dem zweiten Behälter verbunden. Besonders bevorzugt ist das Förderelement als eine Förderspirale ausgebildet.

Ferner wird vorgeschlagen, dass die Neutralisationsvorrichtung zumindest eine Antriebseinheit umfasst, welche in zumindest einem Betriebszustand zu einem Antrieb zumindest der Schwenkbewegung des zweiten Behälters relativ zum ersten Behälter vorgesehen ist. Die Antriebseinheit ist insbesondere zumindest teilweise, vorzugsweise zumindest zu einem Großteil außerhalb des ersten und/oder des zweiten Behälters angeordnet. Vorzugsweise weist die Antriebseinheit zumindest einen Antrieb und insbesondere ein Getriebe auf, welches insbesondere als Zahnradgetriebe und zwar vorzugsweise ein Stirnradgetriebe oder eine Riemengetriebe, ausgebildet ist und welches dazu vorgesehen ist, den zweiten Behälter zumindest in einem Betriebszustand drehfest mit dem Antrieb zu verbinden. Der Antrieb ist insbesondere als ein Elektromotor ausgebildet. Vorzugsweise ist der Antrieb zumindest teilweise, insbesondere zumindest zu einem Großteil und besondere bevorzugt vollständig außerhalb des ersten Behälters und/oder des zweiten Behälters angeordnet. Besonders bevorzugt ist der Antrieb an dem Deckel des ersten Behälters angeordnet. Die Antriebseinheit weist insbesondere zumindest eine Antriebsachse auf. Die Antriebsachse ist insbesondere zumindest im Wesentlichen parallel zur Schwenkachse angeordnet. Vorzugsweise ist die Antriebsachse koaxial zur Schwenkachse orientiert. Ferner weist die Neutralisationsvorrichtung zumindest eine Steuereinheit auf. Unter einer "Steuereinheit" soll insbesondere eine elektronische Einheit verstanden werden, die dazu vorgesehen ist, zumindest die Antriebseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Insbesondere umfasst das Steuer- und/oder Regelprogramm ein Verfahren zur Neutralisation des Fluids. Die Steuereinheit ist insbesondere zu einer Ansteuerung und/oder Regelung der Antriebseinheit, insbesondere des Antriebs der Antriebseinheit, vorgesehen. Die Steuereinheit ist insbesondere dazu vorgesehen, den zweiten Behälter mittels der Antriebseinheit derart anzutreiben, dass dieser zumindest eine teilweise Schwenkbewegung und vorzugsweise eine vollständige Drehbewegung ausführt. Ferner sind insbesondere weitere Betriebsmodi zur Ansteuerung der zumindest teilweisen Drehbewegung des zweiten Behälters denkbar. Beispielsweise ist ein kontinuierlicher Betrieb, ein diskontinuierlicher Betrieb, ein Betrieb mit verschiedenen Drehzahlen, insbesondere einer Drehzahlvariation, und/oder verschiedenen Schwenkrichtungen, insbesondere einer Variation der Schwenkrichtung einer Schwenkbewegung, denkbar. Denkbar ist, dass die Schwenkbewegung des zweiten Behälters relativ zum ersten Behälter durch einen fluidtechnischen Antrieb erfolgen kann. Zum Antrieb könnte insbesondere eine Lage- und/oder Bewegungsenergie des Fluids genutzt werden. Es kann vorteilhaft auf einfache Art und Weise ein Antrieb der Schwenkbewegung erzielt werden. Ferner kann insbesondere ein Bauraum reduziert werden. Besonders vorteilhaft kann vermieden werden, dass ein Antrieb in Kontakt mit zu neutralisierendem Fluid kommt. Weiter vorteilhaft kann ein Wartungsaufwand bei einem Austausch des zweiten Behälters verringert werden.

Um eine besonders kompakte Bauweise zu erzielen, wird vorgeschlagen, dass die Antriebseinheit zumindest ein Antriebselement aufweist, welches in zumindest einem Betriebszustand zu einer Übertragung eines Drehmoments vorgesehen ist und welches mit dem zweiten Behälter zumindest drehfest verbunden ist. Das Antriebselement ist insbesondere ein Teil des Getriebes. Vorzugsweise ist das Antriebselement als ein Zahnrad, insbesondere Stirnrad, und/oder ein Zahnriemen ausgebildet. Besonders bevorzugt ist das Antriebselement mit dem zweiten Behälter und/oder der Lagerachse einstückig ausgebildet. Das Antriebselement ist zumindest teilweise insbesondere zumindest zu einem Großteil und besonders bevorzugt vollständig in dem ersten Behälter angeordnet. Das Antriebselement ist insbesondere dazu vorgesehen, mit zumindest einem weiteren Antriebselement, insbesondere des Getriebes, in zumindest einem Betriebszustand in Verbindung zu stehen und insbesondere mit diesem zu kämmen. Vorzugsweise ist das weitere Antriebselement zumindest teilweise, vorzugsweise zumindest zu einem Großteil und besonders bevorzugt vollständig außerhalb des ersten und/oder des zweiten Behälters angeordnet. Das weitere Antriebselement ist insbesondere korrespondierend zum Antriebselement ausgebildet, und zwar vorzugsweise als Zahnrad, insbesondere Stirnrad, und/oder als Zahnriemen ausgebildet. Vorzugsweise kann eine Verbindung des Antriebselements und des weiteren Antriebselements durch Öffnen des Deckels des ersten Behälters automatisch getrennt werden.

Es wird vorgeschlagen, dass die Neutralisationsvorrichtung zumindest ein Austauschmodul umfasst, welches zumindest den zweiten Behälter und insbesondere das in dem Behälter angeordnete Neutralisationsmaterial, Schmirgelmaterial und/oder Filtermaterial umfasst. Ferner weist das Austauschmodul zumindest teilweise die Antriebseinheit, insbesondere zumindest teilweise das Getriebe, und zwar insbesondere das Antriebselement, auf. Das Austauschmodul weist insbesondere das Neutralisationsmaterial, das Filtermaterial und/oder das Schmirgelmaterial auf, mit welchem/welchen der zweite Behälter befüllt ist. Unter einem "Austauschmodul" soll insbesondere ein Modul verstanden werden, welches dazu vorgesehen ist, von einem Benutzer ausgetauscht zu werden. Das Austauschmodul bildet eine austauschbare Patrone aus, welche zum Einlegen und/oder zum Austausch in/aus dem ersten Behälter, insbesondere in/aus der zweiten Fluidkammer des ersten Behälters vorgesehen ist. Es kann eine Instandhaltung verbessert werden. Insbesondere kann eine Betriebssicherheit erhöht werden, da vermieden wird, dass ein Nutzer in Kontakt mit dem Fluid und/oder dem Neutralisationsmaterial kommt.

In einem weiteren Aspekt der Erfindung wird ein Verfahren zur Neutralisation zumindest eines Fluids, insbesondere eines Kondensats aus einer Verbrennung von Brennstoff, vorgeschlagen, bei welchem in zumindest einem Verfahrensschritt das Fluid von zumindest einem ersten Behälter aufgenommen wird und mittels eines Neutralisationsmaterials, welches in einem zweiten Behälter angeordnet ist, zumindest teilweise neutralisiert wird und die Behälter zumindest teilweise ineinander angeordnet sind, wobei in zumindest einem Verfahrensschritt der zweite Behälter relativ zum ersten Behälter zumindest um eine Schwenkachse geschwenkt wird. Hierdurch kann eine Effizienz der Neutralisationsvorrichtung verbessert werden.

Es wird ferner vorgeschlagen, dass in zumindest einem Verfahrensschritt das Neutralisationsmaterial und insbesondere das Schmirgelmaterial und/oder das Filtermaterial mittels einer Schwenkbewegung des zweiten Behälters relativ zum ersten Behälter um die Schwenkachse in Bewegung versetzt wird und durch die Bewegung Material, insbesondere bei einer Neutralisation entstehende Neutralisationssalze, an einer Oberfläche des Neutralisationsmaterials abgetragen wird. Vorteilhaft wird eine Oberfläche des Neutralisationsmaterials, insbesondere durch gegenseitiges Aneinanderreiben, mechanisch gereinigt. Dadurch kann ein Verbrauch von Neutralisationsmaterial verringert werden. Ferner kann eine wartungsfreie Standzeit verlängert werden, insbesondere ohne dass Neutralisationsmaterial ausgetauscht werden muss.

Des Weiteren wird, insbesondere um eine Verschlammung des Neutralisationsmaterials zu vermeiden, vorgeschlagen, dass in zumindest einem Verfahrensschritt mittels zumindest eines Fluiddurchlasses des zweiten Behälters das Fluid in den zweiten Behälter hinein gefördert wird, um das Neutralisationsmaterial zu spülen, und mittels eines weiteren Fluiddurchlasses des zweiten Behälters zeitlich versetzt zu der Förderung des Fluids in den zweiten Behälter hinein das Fluid zusammen mit zumindest einem bei einer Neutralisation entstehenden und insbesondere von einer Oberfläche des Neutralisationsmaterials gelösten Neutralisationssalz aus dem zweiten Behälter heraus gefördert wird.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Ansicht eines Neutralisators mit zumindest einer Neutralisationsvorrichtung,
- Fig. 2: eine Schnittansicht zumindest eines Teils der Neutralisationsvorrichtung,
- Fig. 3: eine Schnittansicht eines Teils der Neutralisationsvorrichtung
- Fig. 4: einen schematischen Ablaufplan eines Verfahrens zur Neutralisation eines Fluids,
- Fig. 5: einen schematischen Ablaufplan eines Verfahrens zum Austausch eines Austauschmoduls der Neutralisationsvorrichtung und
- Fig. 6: eine alternative Ausgestaltung einer Neutralisationsvorrichtung mit einem Förderelement in einer schematischen Draufsicht.

### Beschreibung der Ausführungsbeispiele

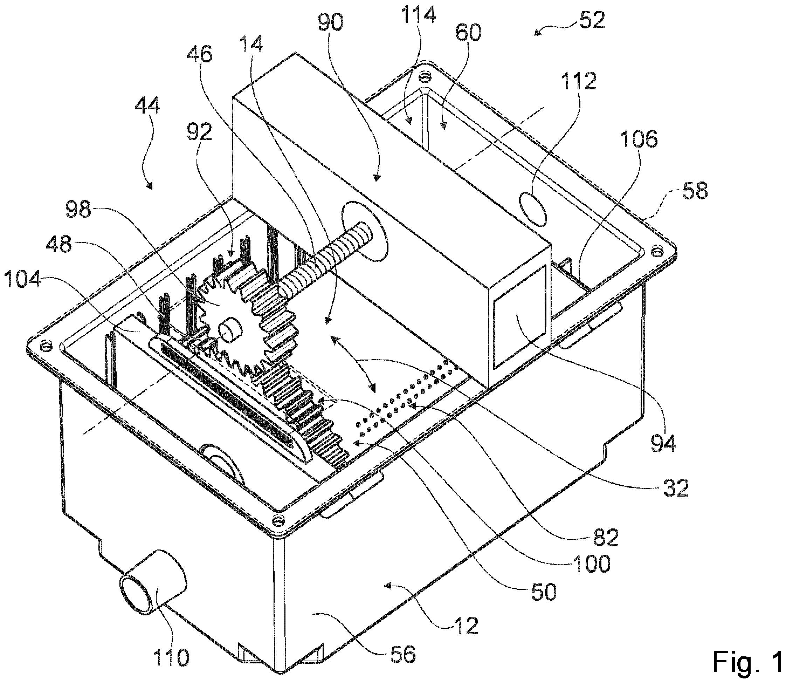

In Figur 1 ist ein Neutralisator 52 mit einer Neutralisationsvorrichtung dargestellt. Die Neutralisationsvorrichtung ist zur Neutralisation zumindest eines Fluids 10 vorgesehen. Bei dem Fluid 10 handelt es sich insbesondere um ein Fluid 10 aus einer Verbrennung von Brennstoff, insbesondere Festbrennstoff, insbesondere Kohle, Torf, Holz, Pellets, Biomasse, und/oder Flüssigkeitsbrennstoff, insbesondere Öl, Heizöl, Biobutanol, Biodiesel, Bioethanol, Bioheizöl, und/oder Gasbrennstoff, wie beispielsweise Erdgas, Klärgas, Deponiegas, Biogas oder dergleichen. Im vorliegenden Fall umfasst das Fluid 10 zumindest eine Flüssigkeit. Die Flüssigkeit ist ein Kondensat aus der Verbrennung. Alternativ oder zusätzlich kann das Fluid 10 ein Gas, insbesondere ein Abgas, umfassen. Die Neutralisationsvorrichtung ist dazu vorgesehen, in zumindest einem Betriebszustand einen pH-Wert des Fluids 10 in Richtung neutral, insbesondere in Richtung eines pH-Werts von 7, zu verschieben. Ferner ist die Neutralisationsvorrichtung zu einer Reinigung und/oder Wiederaufbereitung des Fluids 10 vorgesehen.

Im vorliegenden Fall ist der Neutralisator 52 als ein Feststoff-Neutralisator ausgebildet. Die Neutralisationsvorrichtung weist zumindest ein Neutralisationsmaterial 16 auf. Das Neutralisationsmaterial 16 ist dazu vorgesehen, das Fluid 10 bei einem Durchfluss des Fluids 10 durch das Neutralisationsmaterial 16 und/oder bei einer Mischung mit dem Neutralisationsmaterial 16 zu neutralisieren. Das Neutralisationsmaterial 16 ist zumindest teilweise als Granulat ausgebildet. Im vorliegenden Fall ist das Neutralisationsmaterial 16 vollständig als Granulat ausgebildet. Das Neutralisationsmaterial 16 weist vorzugsweise zumindest teilweise Kalkstein und/oder Magnesiumhydroxid auf. Im vorliegenden Fall besteht das Neutralisationsmaterial 16 vollständig aus Kalkstein. Es ist denkbar, dass das Neutralisationsmaterial 16 zumindest teilweise aus einem anderen Material besteht, welches zu einer Neutralisation geeignet ist.

Die Neutralisationsvorrichtung weist zumindest ein Schmirgelmaterial 54 auf. Das Schmirgelmaterial 54 ist zu einer mechanischen Bearbeitung des Neutralisationsmaterials 16 vorgesehen. Das Schmirgelmaterial 54 ist zu einer Bearbeitung des Neutralisationsmaterials 16 durch Reibung vorgesehen. Das Schmirgelmaterial 54 weist einen größeren Härtegrad auf als das Neutralisationsmaterial 16. Das Schmirgelmaterial 54 ist zumindest teilweise als Granulat ausgebildet. Im vorliegenden Fall ist das Schmirgelmaterial 54 vollständig als Granulat ausgebildet. Das Schmirgelmaterial 54 weist zumindest teilweise Korund auf. Im vorliegenden Fall besteht das Schmirgelmaterial 54 vollständig aus Korund. Alternativ oder zusätzlich kann das Schmirgelmaterial 54 zumindest teilweise aus Sand, Magnetit, Hämatit, Quarz, einem Gemisch dieser oder dergleichen bestehen.

Die Neutralisationsvorrichtung weist zumindest ein Filtermaterial 55 auf. Das Filtermaterial 55 ist zu einer Filtrierung des Fluids vorgesehen. Das Filtermaterial 55 ist zu einer Filtrierung durch Adsorption und/oder Absorption vorgesehen. Das Filtermaterial 55 ist zumindest teilweise als Granulat ausgebildet. Im vorliegenden Fall ist das Filtermaterial 55 vollständig als Granulat ausgebildet. Das Filtermaterial 55 weist zumindest teilweise Aktivkohle auf. Im vorliegenden Fall besteht das Filtermaterial 55 vollständig aus Aktivkohle. Alternativ oder zusätzlich kann das Filtermaterial 55 zumindest teilweise Bentonite oder dergleichen umfassen.

Die Neutralisationsvorrichtung weist zumindest einen ersten Behälter 12 auf. Der erste Behälter 12 ist zumindest zur Aufnahme des Fluids 10 vorgesehen. Der erste Behälter 12 weist zumindest einen Korpus 56 auf. Der Korpus 56 begrenzt einen Innenraum 60. Der Innenraum 60 ist zumindest zur Aufnahme eines zweiten Behälters 14 vorgesehen. Der erste Behälter 12 weist zumindest einen Deckel 58 auf. Der Deckel 58 ist in Figur 1 zur besseren Übersichtlichkeit transparent dargestellt. Der Deckel 58 ist schwenkbar an dem Korpus 56 gelagert. Der Deckel 58 ist mit dem Korpus 56 verbunden. Der Deckel 58 ist dazu vorgesehen, Zugang zum Innenraum 60 zu gewähren. Ferner weist der erste Behälter 12 zumindest eine Durchführöffnung 100 auf. Die Durchführöffnung 100 ist im Deckel 58 des ersten Behälters 12 angeordnet. Der erste Behälter 12 ist als ein Außenbehälter ausgebildet. Der erste Behälter 12 weist eine Form eines Quaders auf.

Der erste Behälter 12 weist zumindest eine erste Fluidkammer 36 auf. In der ersten Fluidkammer 36 ist ein Auffangelement 102 angeordnet. Das Auffangelement 102 ist dazu vorgesehen, in dem Fluid 10 vorhandene Verunreinigungen, wie insbesondere ungebrannte Kohlenwasserstoffe, Schwefel, CO2, Gips, NOX, Staub, Mineralien und/oder Metallionen, welche in dem Brennstoff enthalten sind, sowie insbesondere Metallabtrag eines möglicherweise vorgeschalteten Wärmetauschers, wie Aluminium, Eisen, Blei, Chrom, Kupfer, Zink, Zinn und andere Stoffe, aufzunehmen. Ferner ist die erste Fluidkammer 36 mit einem Ölabscheider versehen. Der Ölabscheider ist dazu vorgesehen, sich an einer Oberfläche des Fluids ablagernde und insbesondere sich bei einer Verbrennung ablagernde Ölpartikel abzuscheiden.

Ferner weist der erste Behälter 12 zumindest eine zweite Fluidkammer 38 auf. Der erste Behälter 12 weist eine Wandung 104 auf. Die Wandung 104 trennt die erste Fluidkammer 36 von der zweiten Fluidkammer 38. Ferner bildet die Wandung 104 zumindest teilweise den Ölabscheider aus. Die Wandung 104 weist eine Wandungsöffnung 108 auf. Die zweite Fluidkammer 38 ist zu einer Aufnahme eines zweiten Behälters 14 der Neutralisationsvorrichtung vorgesehen. Innerhalb der zweiten Fluidkammer 38 findet eine Neutralisation des Fluids 10 statt. In der zweiten Fluidkammer 38 ist zur Aufnahme von bei einer Neutralisation entstehenden Produkten ein weiteres Auffangelement 103 vorgesehen.

Ferner weist der erste Behälter 12 zumindest eine dritte Fluidkammer 88 auf. Der erste Behälter 12 weist eine weitere Wandung 106 auf. Die weitere Wandung 106 trennt die dritte Fluidkammer 88 von der zweiten Fluidkammer 38. Die weitere Wandung 106 bildet einen Sperrfluidschutz für das Fluid 10 aus. Innerhalb der dritten Fluidkammer 88 kann ein zusätzliches Auffangelement 101 angeordnet sein, welches zur Aufnahme von bei einer Neutralisation entstehenden Produkten vorgesehen ist.

Der erste Behälter 12 weist einen Fluideinlass 110 auf. Der Fluideinlass 110 ist der ersten Fluidkammer 36 zugeordnet. Der Fluideinlass 110 ist an dem Korpus 56 angeordnet. Der Fluideinlass 110 ist in einem Nahbereich einer Unterkante des Korpus 56 angeordnet. Ferner weist der erste Behälter 12 einen Fluidauslass 112 auf. Der Fluidauslass 112 ist der dritten Fluidkammer 88 zugeordnet. Der Fluidauslass 112 ist an dem Korpus 56 angeordnet. Der Fluidauslass 112 ist in einem Nahbereich einer Oberkante des Korpus 56 angeordnet. In einem Einbauzustand ist der Fluidauslass 112 relativ zum Fluideinlass 110 erhöht angeordnet.

Die Neutralisationsvorrichtung weist zumindest einen Siphon 114 auf. Der Siphon 114 ist zwischen dem Fluideinlass 110 und dem Fluidauslass 112 gebildet. Der Siphon 114 ist zumindest teilweise von der weiteren Wandung 106, insbesondere der zweiten Fluidkammer 38, welche zu einer Sperrung des Fluids 10 vorgesehen ist, ausgebildet. Ferner wird der Siphon 114 zumindest teilweise von dem Fluideinlass 110 und dem Fluidauslass 112 ausgebildet. Alternativ oder zusätzlich ist es denkbar, dass die Neutralisationsvorrichtung zumindest einen weiteren Siphon umfasst, welcher vor dem ersten Behälter 12 geschaltet ist und insbesondere mit dem Fluideinlass 110 verbunden ist.

Die Neutralisationsvorrichtung weist zumindest den zweiten Behälter 14 auf. Der zweite Behälter 14 ist zumindest zur Aufnahme des Neutralisationsmaterials 16 vorgesehen. Zusätzlich oder alternativ ist der zweite Behälter 14 zu einer Aufnahme des Schmirgelmaterials 54 vorgesehen. Zusätzlich oder alternativ ist der zweite Behälter 14 zu einer Aufnahme des Filtermaterials 55 vorgesehen.

Das Schmirgelmaterial 54 und/oder das Filtermaterial 55 ist/sind vermischt mit dem Neutralisationsmaterial 16 in dem zweiten Behälter 12 angeordnet. Der zweite Behälter 14 ist höchstens zu 90 % seines Volumens mit dem Neutralisationsmaterial 16 und/oder dem Schmirgelmaterial 54 und/oder dem Filtermaterial 55 befüllt. Ferner bildet der zweite Behälter 14, welcher insbesondere mit dem Neutralisationsmaterial 16 und/oder dem Schmirgelmaterial 54 und/oder dem Filtermaterial 55 befüllt ist, zumindest teilweise ein Austauschmodul 50 der Neutralisationsvorrichtung aus. Das Austauschmodul 50 ist dazu vorgesehen, von einem Benutzer ausgetauscht zu werden, insbesondere beispielsweise dann, wenn ein Verschleiß, wie beispielsweise ein Verbrauch des Neutralisationsmaterials 16 und/oder des Schmirgelmaterials 54, vorliegt. Das Austauschmodul 50 bildet eine austauschbare Patrone aus. Das Austauschmodul 50 kann von einem Benutzer in den ersten Behälter, insbesondere in die zweite Fluidkammer des ersten Behälters, eingelegt und/oder aus diesem herausgenommen werden.

Der erste Behälter 12 und der zweite Behälter 14 sind zumindest teilweise ineinander angeordnet. Im vorliegenden Fall ist der zweite Behälter 14 zumindest teilweise in dem ersten Behälter 12 angeordnet. Im vorliegenden Fall ist der zweite Behälter 14 vollständig in dem ersten Behälter 12 angeordnet. Der zweite Behälter 14 ist als ein Innenbehälter ausgebildet. Der zweite Behälter 14 ist relativ zu dem ersten Behälter 12 schwenkbar um eine Schwenkachse 20 gelagert. In zumindest einem Betriebszustand ist bei einer Schwenkbewegung des zweiten Behälters 14 relativ zum ersten Behälter 12 das Neutralisationsmaterial 16 und/oder das Schmirgelmaterial 54 und/oder das Filtermaterial 55 innerhalb des zweiten Behälters 14 in Bewegung versetzbar. Der zweite Behälter 14 ist in der zweiten Fluidkammer 38 angeordnet. Ferner ist der zweite Behälter 14 zu einer Aufnahme des Fluids 10 vorgesehen. Der zweite Behälter 14 verbindet die erste Fluidkammer 36 fluidtechnisch mit der zweiten Fluidkammer 38 des ersten Behälters 12.

Der zweite Behälter 14 weist eine Form eines rotationssymmetrischen Körpers auf. Im vorliegenden Fall weist der zweite Behälter 14 eine Form eines Rotationskörpers auf. Die Form des zweiten Behälters 14 ist die Form eines Kreiszylinders. Alternativ kann der zweite Behälter 14 eine Form eines Polyeders, einer quadratischen Säule, eines Würfels, eines Polygonzylinders, einer Pyramide, eines Kegels, eines Kegelstumpfes, eines Rotationsparaboloids, eines Rotationshyperboloids, eines Rotationsellipsoids, einer Kugel, eines Kreiszylinders oder dergleichen aufweisen.

Der zweite Behälter 14 weist zumindest einen Fluideintritt 22 auf. Der Fluideintritt 22 verbindet den zweiten Behälter 12 mit der ersten Fluidkammer 36. Der Fluideintritt 22 weist zumindest einen Fluideintrittskanal 68 auf. Ferner weist der Fluideintritt 22 zumindest eine Fluideintrittsöffnung 70 auf. Die Fluideintrittsöffnung 70 ist eine Öffnung des Fluideintrittskanals 68. Alternativ oder zusätzlich kann der Fluideintritt 22 zumindest ein Fluidleit- und/oder Fluidablenkelement aufweisen, wie beispielsweise eine Schaufel. Im vorliegenden Fall ist der Fluideintritt 22 als eine Bohrung ausgebildet. Der Fluideintritt 22 ist an einer Stirn 76, insbesondere an einem Vorsprung der Stirn 76, des zweiten Behälters 14 angeordnet. Dem Fluideintritt 22 ist zumindest eine Fluideintrittsrichtung 26 zugeordnet. Die Fluideintrittsrichtung 26 ist eine Richtung in welcher das Fluid 10 in zumindest einem Betriebszustand in den zweiten Behälter 14 eintritt. Die Fluideintrittsrichtung 26 ist zumindest im Wesentlichen senkrecht zur Fluideintrittsöffnung 70. Die Fluideintrittsrichtung 26 ist zumindest im Wesentlichen parallel zur Schwenkachse 20 orientiert.

Ferner weist der zweite Behälter 14 zumindest einen Fluiddurchlass 24 auf. Der Fluiddurchlass 24 verbindet den zweiten Behälter 14 mit der zweiten Fluidkammer 38. Der Fluiddurchlass 24 weist zumindest einen Fluiddurchlasskanal 72 auf. Ferner weist der Fluiddurchlass 24 zumindest eine Fluiddurchlassöffnung 74 auf. Die Fluiddurchlassöffnung 74 ist eine Öffnung des Fluiddurchlasskanals 72. Alternativ oder zusätzlich kann der Fluiddurchlass 24 zumindest ein Fluidleit- und/oder Fluidablenkelement aufweisen, wie beispielsweise eine Schaufel. Im vorliegenden Fall ist der Fluiddurchlass 24 als eine Bohrung ausgebildet. Der Fluiddurchlass 24 weist eine konische Form auf, wodurch insbesondere ein Verstopfen des Fluiddurchlasses 24, insbesondere durch in dem zweiten Behälter angeordnetes Material und/oder Verunreinigungen des Fluids, vermieden werden kann. Der Fluiddurchlass 24 ist an einem Mantel 78 des zweiten Behälters 14 angeordnet. Dem Fluiddurchlass 24 ist zumindest eine Fluiddurchlassrichtung 28 zugeordnet. Die Fluiddurchlassrichtung 28 ist eine Richtung, in welcher das Fluid 10 in zumindest einem Betriebszustand aus dem zweiten Behälter 14 austritt. Die Fluiddurchlassrichtung 28 ist zumindest im Wesentlichen senkrecht zur Fluiddurchlassöffnung 74. Die Fluiddurchlassrichtung 28 ist zumindest im Wesentlichen senkrecht zur Schwenkachse 20 orientiert. Die Fluideintrittsrichtung 26 und die Fluiddurchlassrichtung 28 sind zueinander winklig orientiert. Im vorliegenden Fall sind die Fluideintrittsrichtung 26 und die Fluiddurchlassrichtung 28 zueinander zumindest im Wesentlichen senkrecht orientiert. Ferner sind die Fluideintrittsöffnung 70 und die Fluiddurchlassöffnung 74 winklig zueinander orientiert. Im vorliegenden Fall sind die Fluideintrittsöffnung 70 und die Fluiddurchlassöffnung 74 zumindest im Wesentlichen senkrecht zueinander orientiert.

Der zweite Behälter 14 weist zumindest einen weiteren Fluiddurchlass 30 auf. Der weitere Fluiddurchlass 30 ist äquivalent zum Fluiddurchlass 24 ausgebildet. Der weitere Fluiddurchlass 30 ist entlang einer Umfangsrichtung 32 des zweiten Behälters 14 versetzt zum Fluiddurchlass 24 angeordnet. Alternativ oder zusätzlich kann der weitere Fluiddurchlass 30 entlang der Schwenkachse 20 versetzt zum Fluiddurchlass 24 angeordnet sein. Im vorliegenden Fall weist der zweite Behälter 14 mehrere Fluiddurchlässe 24, 30 auf, welche zueinander versetzt, insbesondere in Umfangsrichtung 32 und/oder entlang der Schwenkachse 20, angeordnet sind und insbesondere zueinander identisch ausgebildet sind. Zur besseren Übersichtlichkeit sind in der Zeichnung nur der Fluiddurchlass 24 und der weitere Fluiddurchlass 30 mit einem Bezugszeichen versehen.

Der Fluiddurchlass 24 ist in zumindest einem Betriebszustand zu einer Förderung des Fluids 10 in den zweiten Behälter 14 hinein vorgesehen. Hierdurch kann insbesondere das Neutralisationsmaterial mittels des Fluids 10 gespült werden und vorteilhaft können durch eine Bewegung des Neutralisationsmaterials 16 von dessen Oberflächen gelöste Neutralisationssalze getrennt werden. Ferner ist in zumindest einem Betriebszustand der weitere Fluiddurchlass 30 zu einer zeitlich zu der Förderung des Fluids 10 in den zweiten Behälter 14 hinein versetzten Förderung des Fluids 10 zusammen mit zumindest einem bei einer Neutralisation entstehenden Neutralisationssalz aus dem zweiten Behälter 14 heraus vorgesehen.

Der zweite Behälter 14 weist zumindest eine Fluiddurchlassgruppe 34 auf. Die Fluiddurchlassgruppe 34 umfasst zumindest den Fluiddurchlass. Im vorliegenden Fall weist die Fluiddurchlassgruppe 34 mehrere Fluiddurchlässe 24 auf. Die Fluiddurchlässe 24 sind zueinander entlang der Schwenkachse 20 und/oder entlang einer Umfangsrichtung 32 des zweiten Behälters 14 versetzt angeordnet. Die Fluiddurchlassgruppe 34 ist an dem Mantel 78 des zweiten Behälters 14 angeordnet. Die Fluiddurchlassgruppe 34 bildet eine Perforation 80 des zweiten Behälters 14, insbesondere des Mantels 78, aus. Die mehreren Fluiddurchlässe 24 der Fluiddurchlassgruppe 34 sind in Form einer Matrix, insbesondere in Zeilen und Spalten, zueinander angeordnet. Alternativ kann die Fluiddurchlassgruppe 34 eine andere Form einer Anordnung der mehreren Fluiddurchlässe 24 aufweisen, wie beispielsweise eine Form eines Vierecks, Rechtecks, Hexagons, Polygons, Kreises oder dergleichen.

Der zweite Behälter 14 weist zumindest eine weitere Fluiddurchlassgruppe 82 auf. Die weitere Fluiddurchlassgruppe 82 ist äquivalent zur Fluiddurchlassgruppe 34 ausgebildet. Die weitere Fluiddurchlassgruppe 82 umfasst zumindest den weiteren Fluiddurchlass 30. Im vorliegenden Fall weist die weitere Fluiddurchlassgruppe 82 mehrere weitere Fluiddurchlässe 30 auf. Die weiteren Fluiddurchlässe 30 sind zueinander entlang der Schwenkachse 20 und/oder entlang der Umfangsrichtung 32 versetzt angeordnet. Im vorliegenden Fall ist die weitere Fluiddurchlassgruppe 82 entlang der Umfangsrichtung 32 des zweiten Behälters 14 versetzt zur Fluiddurchlassgruppe 32 angeordnet. Die weitere Fluiddurchlassgruppe 82 ist in Umfangsrichtung 32 um höchstens 180° zur Fluiddurchlassgruppe 34 versetzt angeordnet. Ferner kann der zweite Behälter 14 zumindest eine, insbesondere mehrere, Fluiddurchlassgruppen 34, 82 aufweisen, wobei die Fluiddurchlassgruppen 34, 82 zueinander in Umfangsrichtung 32 um einen Winkel versetzt angeordnet sind, welcher 360° geteilt durch die Anzahl an Fluiddurchlassgruppen 34, 82 entspricht. Alternativ oder zusätzlich kann die weitere Fluiddurchlassgruppe 82 entlang der Schwenkachse 20 versetzt zur Fluiddurchlassgruppe 34 angeordnet sein.

Die Neutralisationsvorrichtung weist zumindest einen Fluidfilter 40 auf. Der Fluidfilter 40 ist fluidtechnisch vor zumindest dem Fluiddurchlass 24 des zweiten Behälters 14 angeordnet. Im vorliegenden Fall ist der Fluidfilter 40 in einem Nahbereich des Fluideintritts 22 angeordnet. Der Fluidfilter 40 ist innerhalb des zweiten Behälters 14 angeordnet. Ferner ist der Fluidfilter 40 unmittelbar hinter dem Fluideintritt 22 angeordnet. Der Fluidfilter 40 weist eine Form auf, welche zu einem Querschnitt des zweiten Behälters 14 korrespondiert. Der Fluidfilter 40 schließt bündig mit dem Mantel 78 des zweiten Behälters 14 ab.

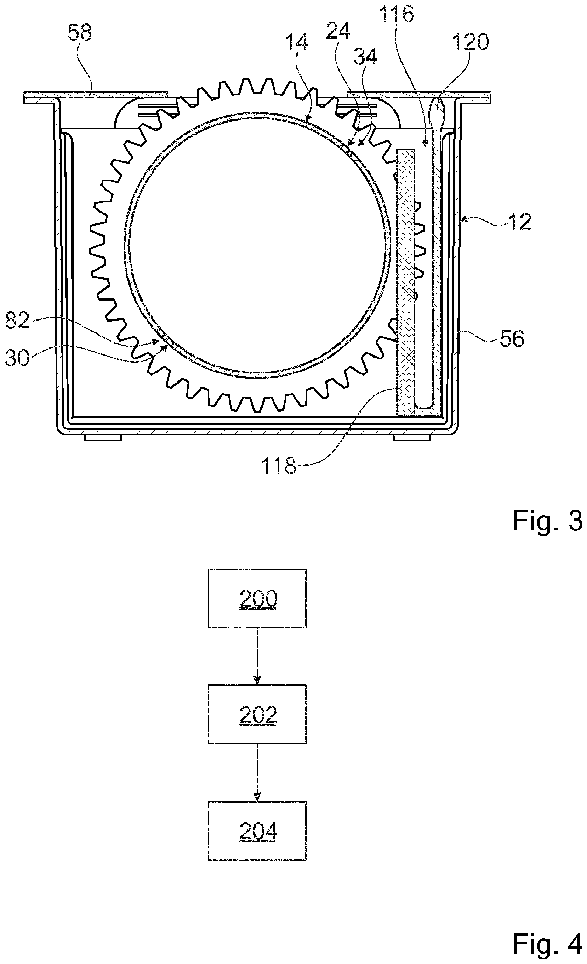

In Figur 3 ist eine Schnittansicht eines Teils der Neutralisationsvorrichtung dargestellt. Der Teil der Neutralisationsvorrichtung ist senkrecht zur Schwenkachse 20 geschnitten. Die Neutralisationsvorrichtung weist eine Filterkartusche 116 auf. Die Filterkartusche 116 ist in dem ersten Behälter 12 angeordnet. Die Filterkartusche 116 ist in der zweiten Fluidkammer 38 angeordnet. Die Filterkartusche 116 umfasst zumindest ein Filterelement 118, welches zu einer Aufnahme von Neutralisationssalzen vorgesehen ist. Alternativ oder zusätzlich kann die Filterkartusche 116 ein Absorptionselement- und/oder ein Adsorptionselement aufweisen. Die Filterkartusche 116 ist in einem Nahbereich des zweiten Behälters 14 angeordnet. Eine Haupterstreckungsrichtung der Filterkartusche 116 ist zumindest im Wesentlichen parallel zur Haupterstreckungsrichtung des zweiten Behälters 14, des ersten Behälters 12 und/oder zur Schwenkachse 20. Eine Haupterstreckungsfläche der Filterkartusche 116 ist zumindest im Wesentlichen parallel zu einer Seitenwand des ersten Behälters 12 angeordnet. Die Filterkartusche 116 ist derart angeordnet, dass eine Stirnseite des Filterelements 118 dem Mantel 78 des zweiten Behälters 14 zugewandt ist. Ferner ist die Stirnseite des Filterelements 118 zumindest im Wesentlichen parallel zu einer Seitenwand des ersten Behälters 12. Die Filterkartusche 116 ist austauschbar ausgebildet. Die Filterkartusche 116 weist zumindest einen Handgriff 120 auf. Der Handgriff 120 ist zu einem Austausch der Filterkartusche 116 vorgesehen. Der Handgriff 120 ist derart angeordnet, dass in zumindest einem Betriebszustand der Handgriff 120 über einem Fluidspiegel liegt.

Die Neutralisationsvorrichtung weist zumindest ein Rührelement 42 auf. Das Rührelement 42 ist innerhalb des zweiten Behälters 14 angeordnet. Das Rührelement 42 ist in zumindest einem Betriebszustand dazu vorgesehen, bei zumindest einer Schwenkbewegung des zweiten Behälters 14 relativ zum ersten Behälter 12 das Neutralisationsmaterial 16 und/oder das Fluid 10 zu rühren. Ferner ist das Rührelement 42 dazu vorgesehen, das Schmirgelmaterial 54 und/oder das Filtermaterial 55 zu rühren. Das Rührelement 42 ist an dem Mantel 78 des zweiten Behälters 14 angeordnet. Das Rührelement 42 ist drehfest mit dem zweiten Behälter 14 verbunden. Das Rührelement 42 ist einstückig mit dem zweiten Behälter 14 verbunden. Alternativ oder zusätzlich kann die Neutralisationsvorrichtung weitere Rührelemente 42 aufweisen, welche insbesondere zueinander äquivalent oder verschieden ausgebildet sein können. Ferner könnte das Rührelement verschiedene Formen aufweisen, wie beispielsweise die Form einer Schaufel, eines Hügels, eines Zahns und/oder einer Lamelle.

Ferner könnte die Neutralisationsvorrichtung alternativ oder zusätzlich zu dem Rührelement zumindest ein Förderelement aufweisen.

Die Neutralisationsvorrichtung weist zumindest eine Lagereinheit 18 auf. Die Lagereinheit 18 ist dazu vorgesehen, den zweiten Behälter 14 relativ zum ersten Behälter 12 beweglich zu lagern. Die Lagereinheit 18 ist dazu vorgesehen, den zweiten Behälter 14 relativ zum ersten Behälter 12 um zumindest die Schwenkachse 20 zumindest teilweise schwenkbar zu lagern. Die Schwenkachse 20 ist senkrecht zu einer von dem zweiten Behälter 14 abhängigen und insbesondere aus dessen Trägheit resultierenden Zentripetalkraft orientiert. Vorzugsweise ist die Schwenkachse 20 zumindest im Wesentlichen parallel zu einer Haupterstreckung des zweiten Behälters 12 orientiert. Die Schwenkachse 20 verläuft zumindest durch den zweiten Behälter 14. Im vorliegenden Fall verläuft die Schwenkachse 20 durch den geometrischen Mittelpunkt des zweiten Behälters 14. Die Schwenkachse 20 bildet eine Rotationsachse des zweiten Behälters 14 aus. Die Lagereinheit 18 ist dazu vorgesehen eine Bewegung des zweiten Behälters 14 relativ zum ersten Behälter 12 in zumindest einem Freiheitsgrad zu ermöglichen, und zwar insbesondere in zumindest einem Freiheitsgrad einer Schwenkbewegung. Ferner ist die Lagereinheit 18 dazu vorgesehen, eine Bewegung des zweiten Behälters 14 relativ zum ersten Behälter 12 in zumindest einem weiteren Freiheitsgrad zumindest einzuschränken. Die Lagereinheit 18 schränkt translatorische Freiheitsgrade des zweiten Behälters 14 relativ zum ersten Behälter 12 ein und/oder blockiert diese Freiheitsgrade. Die Lagereinheit 18 umfasst zumindest eine Lagerachse 62. Die Lagerachse 62 ist zur einer schwenkbaren Lagerung des zweiten Behälters 14 vorgesehen. Die Lagerachse 62 entspricht der Schwenkachse 20. Ferner weist die Lagereinheit 18 zumindest ein Lager 64 auf. Das Lager 64 ist als ein Gleitlager ausgebildet. Das Lager 64 ist zumindest teilweise von der Wandungsöffnung 108 gebildet. Alternativ könnte das Lager 64 auch als ein Wälzlager ausgebildet sein. Das Lager 64 ist zur Führung der Lagerachse 62 vorgesehen. Der Fluideintritt 22 ist insbesondere in einem Nahbereich des zumindest einen Lagers 64 der Lagereinheit 18 angeordnet. Im vorliegenden Fall ist der Fluideintritt 22 ist innerhalb des Lagers 64 der Lagereinheit 18 angeordnet. Ferner weist die Lagereinheit 18 ein weiteres Lager 66 auf. Das weitere Lager 66 ist als ein Gleitlager ausgebildet. Das weitere Lager 66 wird von einem Vorsprung der weiteren Wandung 106 zumindest teilweise gebildet. Das weitere Lager 66 ist zur Führung der Lagerachse 62 vorgesehen. Alternativ oder zusätzlich kann die Lagereinheit 18 zusätzlich zu einer Lagerung des zweiten Behälters 14 zumindest eine translatorische Bewegung des zweiten Behälters 14 ermöglichen, so dass sich insbesondere eine Taumel- und/oder Präzisionsbewegung des zweiten Behälters 14 ergibt. Insbesondere dazu könnte die Lagereinheit 18 zumindest eine Führung aufweisen, welche den zweiten Behälter 14 bei einer Bewegung auf einer definierten Bahn führt.

Die Neutralisationsvorrichtung weist zumindest eine Antriebseinheit 44 auf. Die Antriebseinheit 44 ist in zumindest einem Betriebszustand zum Antreiben einer Schwenkbewegung des zweiten Behälters 14 relativ zum ersten Behälter 12 vorgesehen. Die Antriebseinheit 44 ist zumindest teilweise außerhalb des ersten Behälters 12 angeordnet. Die Antriebseinheit 44 ist zumindest teilweise und insbesondere vollständig außerhalb des zweiten Behälters 14 angeordnet.

Die Antriebseinheit 44 weist zumindest einen Antrieb 90 auf. Der Antrieb 90 ist als ein Elektromotor ausgebildet. Der Antrieb 90 ist zumindest teilweise außerhalb des ersten Behälters 12 und/oder des zweiten Behälters 14 angeordnet. Im vorliegenden Fall ist der Antrieb 90 vollständig außerhalb des ersten Behälters 12 und/oder des zweiten Behälters 14 angeordnet. Der Antrieb 90 ist an dem ersten Behälter 12 angeordnet. Der Antrieb 90 ist an dem Deckel 58 des ersten Behälters 12 angeordnet.

Die Antriebseinheit 44 weist zumindest ein Getriebe 92 auf. Das Getriebe 92 ist dazu vorgesehen, den zweiten Behälter 14 zumindest in einem Betriebszustand drehfest mit dem Antrieb 90 zu verbinden. Im vorliegenden Fall ist das Getriebe 92 als ein Zahnradgetriebe, und zwar insbesondere als ein Stirnradgetriebe, ausgebildet. Alternativ oder zusätzlich kann das Getriebe 92 als ein Riemengetriebe ausgebildet sein. Besonders bevorzugt ist das Getriebe 92 zumindest teilweise an dem Deckel 58 des ersten Behälters 12 angeordnet.

Die Antriebseinheit 44 weist insbesondere zumindest eine Antriebsachse 46 auf. Die Antriebsachse 46 ist zumindest im Wesentlichen parallel zur Schwenkachse 20 angeordnet. Die Antriebsachse 46 ist koaxial zur Schwenkachse 20 orientiert. Die Antriebsachse 46 ist außerhalb des ersten Behälters 12 und/oder des zweiten Behälters 14 angeordnet. Die Antriebsachse 46 ist drehfest zumindest mittelbar und vorzugsweise unmittelbar mit dem Antrieb 90 verbunden.

Die Antriebseinheit 44 weist zumindest ein Antriebselement 48 auf. Das Antriebselement 48 ist Teil des Getriebes 92. Ferner ist das Antriebselement 48 Teil des Austauschmoduls 50. Das Antriebselement 48 ist in zumindest einem Betriebszustand zu einer Übertragung eines Drehmoments vorgesehen. Das Antriebselement 48 überträgt ein Drehmoment zwischen dem Antrieb 90 und dem zweiten Behälter 14. Das Antriebselement 48 ist mit dem zweiten Behälter 14 zumindest drehfest verbunden. Ferner ist das Antriebselement 48 mit der Lagerachse 62 drehfest verbunden. Das Antriebselement 48 ist als ein Zahnrad, und zwar insbesondere als ein Stirnrad, ausgebildet. Alternativ oder zusätzlich kann das Antriebselement 48 als ein Zahnriemen ausgebildet sein. Das Antriebselement 48 kann mit dem zweiten Behälter 14 und/oder der Lagerachse 62 einstückig ausgebildet sein. Das Antriebselement 48 ist zumindest teilweise in dem ersten Behälter 12 angeordnet. Im vorliegenden Fall ist das Antriebselement 48 zumindest zu einem Großteil in dem ersten Behälter 12 angeordnet. Ferner ist das Antriebselement 48 zumindest teilweise außerhalb des ersten Behälters 12 und/oder des zweiten Behälters 14 angeordnet. Das Antriebselement 48 ragt zumindest teilweise aus dem ersten Behälter 12 heraus. Das Antriebselement 48 ragt aus der Durchführöffnung 100 des Deckels 58 heraus.

Die Antriebseinheit 44 weist zumindest ein weiteres Antriebselement 98 auf. Das weitere Antriebselement 98 ist Teil des Getriebes 92. Das weitere Antriebselement 98 ist mit der Antriebsachse 46 drehfest verbunden. Das weitere Antriebselement 98 ist korrespondierend zum Antriebselement 48 ausgebildet. Das weitere Antriebselement 98 ist zumindest teilweise außerhalb des ersten Behälters 12 und/oder des zweiten Behälters 14 angeordnet. Im vorliegenden Fall ist das weitere Antriebselement 98 vollständig außerhalb des ersten Behälters 12 und/oder des zweiten Behälters 14 angeordnet. In einem Betriebszustand steht das weitere Antriebselement 98 mit dem Antriebselement 48 in Verbindung, insbesondere wenn der Deckel 58 des ersten Behälters 12 geschlossen ist. Das weitere Antriebselement 98 kämmt mit dem Antriebselement 48. Die Verbindung des Antriebselements 48 und des weiteren Antriebselements 98 kann durch Öffnen des Deckels 58 des ersten Behälters 12 automatisch getrennt werden.

Die Neutralisationsvorrichtung weist zumindest eine Steuereinheit 94 auf. Die Steuereinheit 94 ist zu einer Steuerung des Antriebs 90, und zwar insbesondere der Schwenkbewegung des zweiten Behälters 14 relativ zum ersten Behälter 12, vorgesehen. Die Steuereinheit 94 umfasst eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden.

In Fig. 3 ist ein beispielhaftes Verfahren zum Betrieb der Neutralisationsvorrichtung dargestellt. Das Verfahren ist zumindest teilweise in der Steuereinheit 94 als ein Betriebsprogramm hinterlegt. Die Steuereinheit 94 führt zumindest teilweise das Verfahren aus.

Das Verfahren umfasst zumindest einen Verfahrensschritt 200. In dem Verfahrensschritt 200 wird ein zu neutralisierendes Fluid 10 mittels des Fluideintritts 22 in den zweiten Behälter 14 geleitet. Das Fluid 10 wird zumindest teilweise von dem Neutralisationsmaterial 16 neutralisiert. Bei der Neutralisation lagern sich an der Oberfläche des Neutralisationsmaterials 16 Neutralisationssalze an.

Das Verfahren umfasst zumindest einen weiteren Verfahrensschritt 202. In dem Verfahrensschritt 202 wird der zweite Behälter 14 relativ zum ersten Behälter 12 zumindest um die Schwenkachse 20 geschwenkt. Der zweite Behälter 14 wird in eine Schwenkbewegung versetzt. Im vorliegenden Fall wird der zweite Behälter 14 relativ zum ersten Behälter 12 vollständig um die Schwenkachse 20 gedreht. Die Steuereinheit 94 steuert den Antrieb 90 entsprechend einer gewünschten Drehzahl und/oder entsprechend einem gewünschten Betriebsmodus, kontinuierlich und/oder diskontinuierlich an. Denkbar ist, dass mittels der Steuereinheit 94 eine Drehbewegung des zweiten Behälters 14 relativ zum ersten Behälter 12 variiert wird, wie beispielsweise eine Betriebsdauer, eine Drehzahl, eine Drehrichtung oder dergleichen

Das Neutralisationsmaterial 16 und insbesondere das Schmirgelmaterial 54 wird mittels der Schwenkbewegung des zweiten Behälters 14 relativ zum ersten Behälter 12 um die Schwenkachse 20 in Bewegung versetzt. Durch die Bewegung wird Material, insbesondere das bei der Neutralisation entstehende Neutralisationssalz, an der Oberfläche des Neutralisationsmaterials 16 abgetragen. Der Abtrag erfolgt dabei durch eine mechanische Reibung zwischen einzelnen Granulatpartikeln des Neutralisationsmaterials 16 und insbesondere des Schmirgelmaterials 54. Die Oberfläche des Neutralisationsmaterials 16 wird durch gegenseitiges Aneinanderreiben mechanisch gereinigt.

Das Verfahren umfasst zumindest einen weiteren Verfahrensschritt 204. In dem Verfahrensschritt 204 wird mittels zumindest eines Fluiddurchlasses 24 des zweiten Behälters 14 das Fluid 10 in den zweiten Behälter 14 hinein gefördert. Hierdurch wird das Neutralisationsmaterial 16 mit dem Fluid 10 gespült. Ferner wird mittels des weiteren Fluiddurchlasses 30 des zweiten Behälters 14 zeitlich versetzt zu der Förderung des Fluids 10 in den zweiten Behälter 14 hinein das Fluid 10 zusammen mit dem bei einer Neutralisation entstehenden und insbesondere von einer Oberfläche des Neutralisationsmaterials 16 gelösten Neutralisationssalz aus dem zweiten Behälter 14 heraus gefördert.

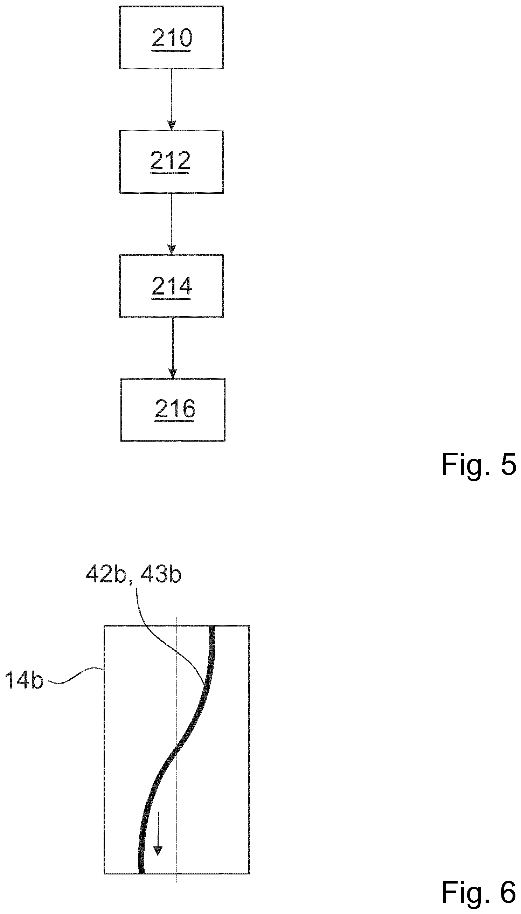

In Figur 5 ist ein schematischer Verfahrensablaufplan eines Verfahrens zum Austausch des Austauschmoduls 50 dargestellt.

Das Verfahren umfasst zumindest einen Verfahrensschritt 210. In dem Verfahrensschritt 210 wird der Deckel 58 geöffnet. Der Deckel 58 kann durch Verschwenken entlang einer Schwenkachse 20 geöffnet werden. Dabei verläuft die Schwenkachse 20 zumindest im Wesentlichen parallel zu einer Haupterstreckungsrichtung des ersten Behälters 12. Durch das Öffnen des Deckels 58 wird das Austauschmodul 50 freigegeben.

Das Verfahren umfasst einen weiteren Verfahrensschritt 212. In dem weiteren Verfahrensschritt 212 wird das Austauschmodul 50 aus dem ersten Behälter 12 entnommen. Dazu wird das Austauschmodul 50 zumindest im Wesentlichen senkrecht zu der Haupterstreckung des ersten Behälters 12 aus diesem ausgeführt. Ferner kann das Austauschmodul 50 entsorgt werden. Alternativ ist es denkbar, dass das Austauschmodul 50 wiederbefüllbar ist. Somit können/kann ein Neutralisationsmaterial, ein Schmirgelmaterial und/oder ein Filtermaterial ausgetauscht werden und dasselbe Austauschmodul in einem weiteren Verfahrensschritt wieder eingesetzt werden.

Das Verfahren umfasst einen weiteren Verfahrensschritt 214. In dem weiteren Verfahrensschritt 214 wird ein weiteres Austauschmodul 51 bereitgestellt. Alternativ könnte das wieder befüllte Austauschmodul 51 verwendet werden. In dem Verfahrensschritt 214 wird das Austauschmodul 51 senkrecht zur Haupterstreckungsrichtung des ersten Behälters 12 in diesen eingesetzt.

Das Verfahren umfasst einen weiteren Verfahrensschritt 216. In dem weiteren Verfahrensschritt 216 wird der Deckel 58 wieder verschlossen. Die Neutralisationsvorrichtung ist wieder betriebsbereit.

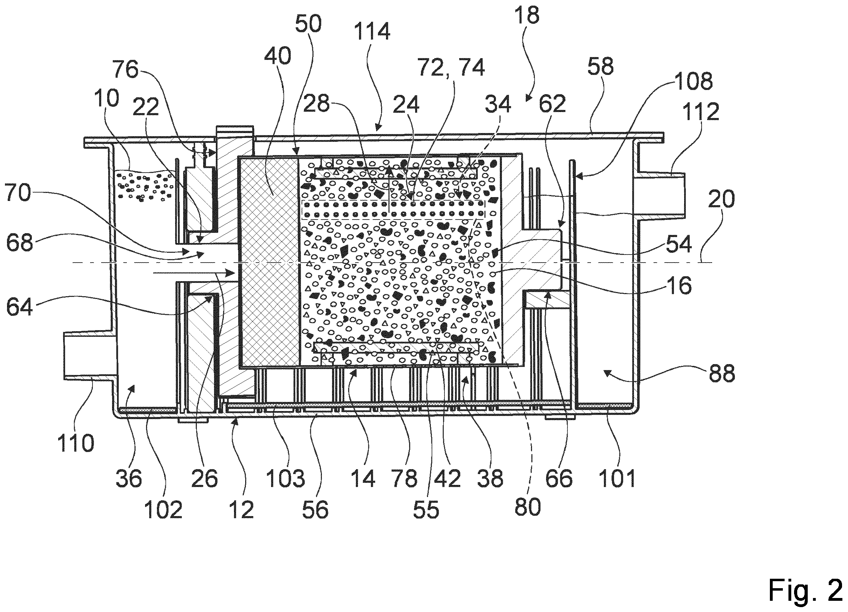

In Figur 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 5, verwiesen werden kann. Zur Unterscheidung der Ausführungsbeispiele ist dem Bezugszeichen in dem Ausführungsbeispiel der Figur 6 der Buchstabe b nachgestellt.

Die in der Figur 6 dargestellte Ausgestaltung der Neutralisationsvorrichtung unterscheidet sich von der vorhergehenden zumindest durch ein zusätzliches Förderelement 43b. Das Förderelement 43b ist innerhalb eines zweiten Behälters 14b der Neutralisationsvorrichtung angeordnet. Das Förderelement 43b ist zumindest in einem Betriebszustand dazu vorgesehen, Neutralisationsmaterial, Filtermaterial und/oder das Schmirgelmaterial entlang dem zweiten Behälter 14b zu fördern. Das Förderelement 43b ist vorzugsweise an einem Mantel 78b des zweiten Behälters 14b angeordnet und/oder drehfest mit dem zweiten Behälter 14b verbunden. Das Förderelement 43b ist einstückig mit dem zweiten Behälter 14b verbunden. Das Förderelement 43b ist als eine Förderspirale ausgebildet. Das Förderelement 43b kann einstückig mit dem Rührelement 42b ausgebildet sein.

## Patentansprüche

1. Neutralisationsvorrichtung, welche zur Neutralisation zumindest eines Fluids (10), insbesondere eines Kondensats aus einer Verbrennung von Brennstoff, vorgesehen ist, mit zumindest einem ersten Behälter (12), welcher zur Aufnahme des Fluids (10) vorgesehen ist, und mit zumindest einem zweiten Behälter (14), welcher zumindest zur Aufnahme von Neutralisationsmaterial (16) vorgesehen ist, wobei die Behälter (12, 14) zumindest teilweise ineinander angeordnet sind, und mit einer Lagereinheit (18), die dazu vorgesehen ist, den zweiten Behälter (14) relativ zum ersten Behälter (12) beweglich zu lagern, wobei die Lagereinheit (18) dazu vorgesehen ist, den zweiten Behälter (14) relativ zum ersten Behälter (12) um zumindest eine Schwenkachse (20) zumindest teilweise schwenkbar zu lagern, **dadurch gekennzeichnet, dass** der erste Behälter (12) zumindest eine erste Fluidkammer (36) und zumindest eine zweite Fluidkammer (38) aufweist, welche der zweite Behälter (14) fluidtechnisch miteinander verbindet.

2. Neutralisationsvorrichtung nach Anspruch 1, **dadurch gekennzeichnet, dass** die Schwenkachse (20) zumindest durch den zweiten Behälter (14) verläuft.

3. Neutralisationsvorrichtung nach Anspruch 1 oder 2, **dadurch gekennzeichnet, dass** der zweite Behälter (14) zumindest einen Fluideintritt (22) und zumindest einen Fluiddurchlass (24) aufweist, wobei dem Fluideintritt (22) zumindest eine Fluideintrittsrichtung (26) und dem Fluiddurchlass (24) zumindest eine Fluiddurchlassrichtung (28) zugeordnet ist, welche zueinander winklig orientiert sind.

4. Neutralisationsvorrichtung nach einem der vorhergehenden Ansprüche, **dadurch gekennzeichnet, dass** der zweite Behälter (14) zumindest einen Fluideintritt (22) aufweist, welchem zumindest eine Fluideintrittsrichtung (26) zugeordnet ist, welche zumindest im Wesentlichen parallel zu der Schwenkachse (20) orientiert ist.

5. Neutralisationsvorrichtung nach Anspruch 3 oder 4, **dadurch gekennzeichnet, dass** der zweite Behälter (14) zumindest einen weiteren Fluiddurchlass (30) aufweist, welcher entlang der Schwenkachse (20) und/oder entlang einer Umfangsrichtung (32) des zweiten Behälters (14) versetzt zum Fluiddurchlass (24) angeordnet ist.

6. Neutralisationsvorrichtung nach Anspruch 5, **dadurch gekennzeichnet, dass** der Fluiddurchlass (24) zu einer Förderung des Fluids (10) in den zweiten Behälter (14) hinein vorgesehen ist, um das Neutralisationsmaterial (16) zu spülen, und dass der weitere Fluiddurchlass (30) zu einer zeitlich zu der Förderung des Fluids (10) in den zweiten Behälter (14) hinein versetzten Förderung des Fluids (10) zusammen mit zumindest einem bei einer Neutralisation entstehenden Neutralisationssalz aus dem zweiten Behälter (14) heraus vorgesehen ist.

7. Neutralisationsvorrichtung nach einem der vorhergehenden Ansprüche, **dadurch gekennzeichnet, dass** der zweite Behälter (14) zumindest eine Fluiddurchlassgruppe (34) aufweist, welche mehrere Fluiddurchlässe (24) umfasst.

8. Neutralisationsvorrichtung nach einem der vorhergehenden Ansprüche, **dadurch gekennzeichnet, dass** der zweite Behälter (14) eine Form eines rotationssymmetrischen Körpers aufweist.

9. Neutralisationsvorrichtung nach einem der vorhergehenden Ansprüche, **gekennzeichnet durch** zumindest einen Fluidfilter (40), welcher fluidtechnisch vor zumindest einem Fluiddurchlass (24) des zweiten Behälters (14) angeordnet ist.

10. Neutralisationsvorrichtung nach einem der vorhergehenden Ansprüche, **dadurch gekennzeichnet, dass** innerhalb des zweiten Behälters (14) zumindest ein Rührelement (42) angeordnet ist, welches in zumindest einem Betriebszustand dazu vorgesehen ist, bei zumindest einer Schwenkbewegung des zweiten Behälters (14) relativ zum ersten Behälter (12) zumindest das Neutralisationsmaterial (16) und/oder das Fluid (10) zu rühren.

11. Neutralisationsvorrichtung nach einem der vorhergehenden Ansprüche, **gekennzeichnet durch** eine Antriebseinheit (44), welche in zumindest einem Betriebszustand zu einem Antreiben zumindest der Schwenkbewegung des zweiten Behälters (14) relativ zum ersten Behälter (12) vorgesehen ist.

12. Neutralisationsvorrichtung nach Anspruch 11, **dadurch gekennzeichnet, dass** die Antriebseinheit (44) zumindest eine Antriebsachse (46) aufweist, welche koaxial zur Schwenkachse (20) orientiert ist.

13. Neutralisationsvorrichtung nach Anspruch 11 oder 12, **dadurch gekennzeichnet, dass** die Antriebseinheit (44) zumindest ein Antriebselement (48) aufweist, welches in zumindest einem Betriebszustand zu einer Übertragung eines Drehmoments vorgesehen ist und welches mit dem zweiten Behälter (14) zumindest drehfest verbunden ist.

14. Neutralisationsvorrichtung nach einem der vorhergehenden Ansprüche, **gekennzeichnet durch** ein Austauschmodul (50), welches zumindest den zweiten Behälter (14) umfasst.

15. Verfahren zur Neutralisation zumindest eines Fluids (10), insbesondere eines Kondensats aus einer Verbrennung von Brennstoff mit einer Neutralisationsvorrichtung, insbesondere nach einem der Ansprüche 1 bis 14, bei welchem in zumindest einem Verfahrensschritt das Fluid (10) von zumindest einem ersten Behälter (12) aufgenommen wird und mittels eines Neutralisationsmaterials (16), welches in einem zweiten Behälter (14) angeordnet ist, zumindest teilweise neutralisiert wird und die Behälter (12, 14) zumindest teilweise ineinander angeordnet sind, wobei der erste Behälter (12) zumindest eine erste Fluidkammer (36) und zumindest eine zweite Fluidkammer (38) aufweist, welche der zweite Behälter (14) fluidtechnisch miteinander verbindet, wobei in zumindest einem Verfahrensschritt der zweite Behälter (14) relativ zum ersten Behälter (12) zumindest um eine Schwenkachse (20) geschwenkt wird.

16. Verfahren nach Anspruch 15, **dadurch gekennzeichnet, dass** in zumindest einem Verfahrensschritt das Neutralisationsmaterial (16) mittels einer Schwenkbewegung des zweiten Behälters (14) relativ zum ersten Behälter (12) um die Schwenkachse (20) in Bewegung versetzt wird und durch die Bewegung Material an einer Oberfläche des Neutralisationsmaterials (16) abgetragen wird.

17. Verfahren nach Anspruch 15 oder 16, **dadurch gekennzeichnet, dass** in zumindest einem Verfahrensschritt mittels zumindest eines Fluiddurchlasses (24) des zweiten Behälters (14) das Fluid (10) in den zweiten Behälter (14) hinein gefördert wird, um das Neutralisationsmaterial (16) zu spülen, und mittels eines weiteren Fluiddurchlasses (30) des zweiten Behälters (14) zeitlich versetzt zu der Förderung des Fluids (10) in den zweiten Behälter (14) hinein das Fluid (10) zusammen mit zumindest einem bei einer Neutralisation entstehenden Neutralisationssalz aus dem zweiten Behälter (14) heraus gefördert wird.

18. Verfahren zum Austausch des Austauschmoduls (50) zumindest nach Anspruch 14, **dadurch gekennzeichnet, dass** in zumindest einem Verfahrensschritt das Austauschmodul (50) zum Austausch in den ersten Behälter (12) eingesetzt und/oder aus dem ersten Behälter (12) entnommen wird.

## Claims

1. Neutralisation device, configured for a neutralisation of at least one fluid (10), in particular a condensate that results from a combustion of a fuel, with at least one first container (12) which is configured for an accommodation of the fluid (10), and with at least one second container (14) which is configured at least for an accommodation of neutralisation material (16), the containers (12, 14) being arranged at least partially in one another, and with a bearing unit (18), which is configured to movably support the second container (14) relative to the first container (12), the support unit (18) being configured to support the second container (14) relative to the first container (12) in such a way that it is at least partially pivotable about at least one pivot axis (20),
**characterised in that** the first container (12) comprises at least one first fluid chamber (36) and at least one second fluid chamber (38), which are fluidically connected by the second container (14).

2. Neutralisation device according to claim 1, **characterised in that** the pivot axis (20) extends at least through the second container (14).

3. Neutralisation device according to claim 1 or 2, **characterised in that** the second container (14) comprises at least one fluid entry (22) and at least one fluid pass-through (24), wherein at least one fluid entry direction (26) is allocated to the fluid entry (22) and at least one fluid pass-through direction (28) is allocated to the fluid pass-through (24), said directions (26, 28) being oriented at an angle to one another.

4. Neutralisation device according to one of the preceding claims, **characterised in that** the second container (14) comprises at least one fluid entry (22), wherein at least one fluid entry direction (26) that is oriented at least substantially in parallel to the pivot axis (20) is allocated to the fluid entry (22).

5. Neutralisation device according to claim 3 or 4, **characterised in that** the second container (14) comprises at least one further fluid pass-through (30), which is arranged offset to the fluid pass-through (24) along the pivot axis (20) and/or along a circumferential direction (32) of the second container (14).

6. Neutralisation device according to claim 5, **characterised in that** the fluid pass-through (24) is configured for a conveyance of the fluid (10) into the second container (14) for a purging of the neutralisation material (16), and that the further fluid pass-through (30) is configured for a conveyance of the fluid (10), together with a neutralisation salt resulting from a neutralisation, out of the second container (14), which is temporally offset to the conveyance of the fluid (10) into the second container (14).

7. Neutralisation device according to one of the preceding claims, **characterised in that** the second container (14) comprises at least one fluid pass-through array (34) having a plurality of fluid pass-throughs (24).

8. Neutralisation device according to one of the preceding claims, **characterised in that** the second container (14) has the shape of a rotationally symmetrical body.

9. Neutralisation device according to one of the preceding claims, **characterised by** at least one fluid filter (40), which is fluidically arranged upstream of at least one fluid pass-through (24) of the second container (14).

10. Neutralisation device according to one of the preceding claims, **characterised in that** at least one stirring element (42) is arranged within the second container (14), the stirring element (42) being configured, in at least one operation state, to stir at least the neutralisation material (16) and/or the fluid (10) in at least one pivot movement of the second container (14) relative to the first container (12).

11. Neutralisation device according to one of the preceding claims, **characterised by** a drive unit (44) which is configured, in at least one operation state, to drive at least the pivot movement of the second container (14) relative to the first container (12).

12. Neutralisation device according to claim 11, **characterised in that** the drive unit (44) comprises at least one drive axle (46) that is aligned coaxially with the pivot axis (20).

13. Neutralisation device according to claim 11 or 12, **characterised in that** the drive unit (44) comprises at least one drive element (48), which is in at least one operation state configured for a transfer of a torque, and which is connected with the second container (14) at least in a rotationally fixed manner.

14. Neutralisation device according to one of the preceding claims, **characterised by** an exchange module (50), which comprises at least the second container (14).

15. Method for a neutralisation of at least one fluid (10), in particular a condensate resulting from a combustion of a fuel, with a neutralisation device, in particular according to one of claims 1 to 14, in which in at least one method step the fluid (10) is received by at least one first container (12) and is at least partially neutralised by means of a neutralisation material (16) that is arranged in a second container (14), and the containers (12, 14) are arranged at least partly in one another,
wherein the first container (12) comprises at least one first fluid chamber (36) and at least one second fluid chamber (38), which are fluidically connected to one another via the second container (14),
wherein in at least one method step the second container (14) is pivoted, relative to the first container (12) at least about a pivot axis (20).

16. Method according to claim 15, **characterised in that** in at least one method step the neutralisation material (16) is set into movement by a pivot movement of the second container (14), relative to the first container (12), about the pivot axis (20), and material is removed from a surface of the neutralisation material (16) by way of the movement.

17. Method according to claim 15 or 16, **characterised in that** in at least one method step, for a purging of the neutralisation material (16), the fluid (10) is conveyed into the second container (14) via at least one fluid pass-through (24) of the second container (14), and that the fluid (10) is conveyed, together with at least one neutralisation salt resulting from a neutralisation, out of the second container (14) in a manner that is temporally offset to the conveyance of the fluid (10) into the second container (14), via a further fluid pass-through (30) of the second container (14).

18. Method for an exchange of the exchange module (50) at least according to claim 14, **characterised in that** in at least one method step, the exchange module (50) is inserted into the first container (12) and/or removed from the first container (12) for an exchange.

## Revendications

1. Dispositif de neutralisation prévu pour une neutralisation d'au moins un fluide (10), notamment un condensat résultant d'une combustion d'un combustible, avec au moins un premier récipient (12) prévu pour accueillir le fluide (10) et avec au moins un deuxième récipient (14) prévu au moins pour accueillir un matériau de neutralisation (16), les récipients (12, 14) étant au moins partiellement agencés l'un dans l'autre, et avec une unité de palier (18) prévue pour supporter le deuxième récipient (14) de telle manière qu'il soit pivotable, relativement au premier récipient (12), autour d'au moins un axe pivotant (20),
**caractérisé en ce que** le premier récipient (12) comporte au moins une première chambre de fluide (36) et au moins une deuxième chambre de fluide (38), lesdites chambres de fluide (36, 38) étant raccordées, de manière fluidique, l'une avec l'autre par le deuxième récipient (14).

2. Dispositif de neutralisation selon la revendication 1,
**caractérisé en ce que** l'axe pivotant (20) s'étend au moins au travers du deuxième récipient (14).

3. Dispositif de neutralisation selon l'une quelconque des revendications 1 ou 2,
**caractérisé en ce que** le deuxième récipient (14) comporte au moins une entrée de fluide (22) et au moins un passage de fluide (24), où au moins une direction d'entrée de fluide (26) est allouée à l'entrée de fluide (22) et au moins une direction de passage de fluide (28) est allouée au passage de fluide (24), lesdites directions (26, 28) étant orientées incluant un angle l'une avec l'autre.

4. Dispositif de neutralisation selon l'une quelconque des revendications précédentes,
**caractérisé en ce que** le deuxième récipient (14) comporte au moins une entrée de fluide (22), où au moins une direction d'entrée de fluide (26), qui est orientée au moins sensiblement en parallèle à l'axe pivotant (20), est allouée à l'entrée de fluide (22).

5. Dispositif de neutralisation selon l'une quelconque des revendications 3 ou 4,
**caractérisé en ce que** le deuxième récipient (14) comporte au moins un autre passage de fluide (30) disposé le long de l'axe pivotant (20) et/ou le long d'une direction circonférentielle (32) du deuxième récipient (14) et décalé par rapport au passage de fluide (24).

6. Dispositif de neutralisation selon la revendication 5,
**caractérisé en ce que** le passage de fluide (24) est prévu à un convoyage du fluide (10) dans le deuxième récipient (14) pour le rinçage du matériau de neutralisation (16), et que l'autre passage de fluide (30) est prévu pour un convoyage du fluide (10), ensemble avec au moins un sel de neutralisation résultant de la neutralisation, en dehors du deuxième récipient (14), ledit convoyage étant temporellement décalé par rapport au convoyage du fluide (10) dans le deuxième récipient (14).

7. Dispositif de neutralisation selon l'une quelconque des revendications précédentes,
**caractérisé en ce que** le deuxième récipient (14) comporte au moins un groupement de passages de fluide (34) comprenant plusieurs de passages de fluide (24).

8. Dispositif de neutralisation selon l'une quelconque des revendications précédentes,
**caractérisé en ce que** le deuxième récipient (14) est formé comme corps à symétrie de rotation.

9. Dispositif de neutralisation selon l'une quelconque des revendications précédentes,
**caractérisé par** au moins un filtre de fluide (40) disposé, fluidiquement, en amont d'au moins un passage de fluide (24) du deuxième récipient (14).

10. Dispositif de neutralisation selon l'une quelconque des revendications précédentes,
**caractérisé en ce qu'**au moins un élément agitateur (42) est disposé dans le deuxième récipient (14), ledit élément agitateur (42) étant configuré, en au moins un état opératif, à agiter au moins le matériau de neutralisation (16) et/ou le fluide (10) en cas d'au moins un mouvement pivotant du deuxième récipient (14) par rapport au premier récipient (12).

11. Dispositif de neutralisation selon l'une quelconque des revendications précédentes,
**caractérisé par** une unité d'entraînement (44) prévue, en au moins un état opératif, pour un entraînement au moins du mouvement pivotant du deuxième récipient (14) par rapport au premier récipient (12).

12. Dispositif de neutralisation selon la revendication 11,
**caractérisé en ce que** l'unité d'entraînement (44) comporte au moins un axe d'entraînement (46) orienté coaxialement avec l'axe pivotant.

13. Dispositif de neutralisation selon la revendication 11 ou 12,
**caractérisé en ce que** l'unité d'entraînement (44) comporte au moins un élément d'entraînement (48) qui est prévu, en au moins un état opératif, pour un transfert d'un torque et qui est raccordé au deuxième récipient (14) au moins solidaire en rotation.

14. Dispositif de neutralisation selon l'une quelconque des revendications précédentes,
**caractérisé par** un module de remplacement (50) comprenant au moins le deuxième récipient (14).

15. Procédé de neutralisation d'au moins un fluide (10), en particulier d'un condensat résultant d'une combustion de combustible, avec un dispositif de neutralisation selon l'une quelconque des revendications 1 à 14,
- où en au moins une première étape du procédé le fluide (10) est reçu par au moins un premier récipient (12) et est neutralisé au moins partiellement par le biais d'un matériau de neutralisation (16) disposé dans un deuxième récipient (14)
- et les récipients (12, 14) sont disposés au moins partiellement l'un dans l'autre,
- où le premier récipient (12) comporte au moins une première chambre de fluide (36) et au moins une deuxième chambre de fluide (38) qui sont fluidiquement raccordées par le deuxième récipient (14),
- où en au moins une étape du procédé le deuxième récipient (14) est pivoté, autour d'un axe pivotant (20), relativement au premier récipient (12).

16. Procédé selon la revendication 15,
**caractérisé en ce qu',**
en au moins une étape du procédé, le matériau de neutralisation (16) est mis en mouvement par un pivotement du deuxième récipient (14), autour de l'axe pivotant (20), par rapport au premier récipient (12), et que par le biais dudit mouvement du matériau est enlevé d'une surface du matériau de neutralisation (16).

17. Procédé pour remplacer le module de remplacement (50) au moins selon la revendication 14,
**caractérisé en ce qu',** en au moins une étape du procédé le fluide (10) est convoyé dans le deuxième récipient (14), par la voie d'un passage de fluide (24) du deuxième récipient (14), pour purger le matériau de neutralisation (16), et que, en décalage temporel par rapport au convoyage du fluide (10) dans le deuxième récipient 814), le fluide (10) est convoyé en dehors le deuxième récipient, ensemble avec au moins un sel de neutralisation produit dans une neutralisation, par un autre passage de fluide (30) du deuxième récipient (14).

18. Procédé pour un remplacement du module de remplacement (50) au moins selon la revendication 14,
**caractérisé en ce qu',** en au moins une étape du procédé, pour le remplacement, le module de remplacement (50) est inséré dans le premier récipient (12) et/ou enlevé du premier récipient (12).
